# EUROPEAN PATENT APPLICATION

(11) **EP 4 827 028 A1**
(43) Date of publication of application: **21.10.2026**
(21) Application number: 24911079.2
(22) Date of filing: 24.12.2024
(51) Int. Cl.: H04L 1/22

(54) **COMMUNICATION METHOD AND COMMUNICATION APPARATUS**

(30) Priority: 28.12.2023 CN 202311846267
(71) Applicant: Huawei Technologies Co., Ltd., Shenzhen, Guangdong 518129 (CN)
(72) Inventor: XIAO, Ruxue, Shenzhen, Guangdong 518129 (CN); QIAN, Jin, Shenzhen, Guangdong 518129 (CN)
(74) Representative: Maiwald GmbH
(86) International application number: PCT/CN2024/141665
(87) International publication number: WO 2025/140152

(57) **Abstract**

A communication method and a communication apparatus are provided. A first apparatus may perform frequency domain duplication on a data packet at a packet data convergence protocol layer, a radio link control layer, or a media access control layer, and distribute the original data packet and the duplicated data packet to different links or carriers for transmission. In this way, first data can be simultaneously transmitted on idle air interface resources corresponding to a plurality of links or a plurality of carriers. For example, when the plurality of links include a new radio transmission link and a long term evolution transmission link, the first apparatus can simultaneously use idle air interface resources of both new radio and long term evolution. Therefore, in the solutions of this application, idle air interface resources can be used as much as possible through redundant data transmission, to reduce packet loss and transmission delay, ensure reliability of downlink data transmission of a service, and help improve user experience of the service.

## Description

This application claims priority to Chinese Patent Application No. 202311846267.8, filed with the China National Intellectual Property Administration on December 28, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

The packet loss rate and transmission delay are important factors that affect user experience of a service. Fluctuations in the channel environment may cause an increase in the packet loss rate and transmission delay, and may even lead to service interruption, thereby degrading user experience of the service.

### SUMMARY

This application provides a communication method and a communication apparatus to reduce packet loss and transmission delay, thereby improving user experience of a service.

According to a first aspect, a communication method is provided. The method includes: An entity at a first layer of a first apparatus receives first data, where the entity at the first layer is associated with a first entity at a second layer and a second entity at the second layer; and the entity at the first layer sends the first data through the first entity at the second layer, and sends the first data through the second entity at the second layer.

For example, the first apparatus may be a first access network device. Unless otherwise specified, the "first access network device" may be a first access network device itself, or may be an apparatus that can support the first access network device in implementing a function of the first access network device. When the first apparatus is the first access network device, the entity at the first layer of the first access network device may send the first data to a terminal device through the first entity at the second layer, and send the first data to the terminal device through the second entity at the second layer.

According to the foregoing method, the first apparatus may send the first data through the first entity at the second layer and the second entity at the second layer, in other words, the first apparatus may send the same data on a plurality of links or a plurality of carriers. In this way, the first data can be simultaneously transmitted on idle air interface resources corresponding to the plurality of links or the plurality of carriers. For example, when the plurality of links include a new radio transmission link and a long term evolution transmission link, the first data can be simultaneously transmitted on idle air interface resources of new radio and long term evolution. Therefore, in the foregoing method, the idle air interface resources can be used as much as possible through redundant data transmission, to reduce packet loss and transmission delay, ensure reliability of downlink data transmission of a service, and help improve user experience of the service.

With reference to the first aspect, in some possible implementations, the first layer is a packet data convergence protocol (packet data convergence protocol, PDCP) layer, and the second layer is a radio link control (radio link control, RLC) layer; the first layer is a radio link control RLC layer, and the second layer is media access control (media access control, MAC); or the first layer is a MAC layer, and the second layer is a physical (physical, PHY) layer.

With reference to any one of the first aspect or the implementations of the first aspect, in some other possible implementations, the first entity at the second layer and the second entity at the second layer belong to the first apparatus; or the first entity at the second layer belongs to the first apparatus, and the second entity at the second layer belongs to a second apparatus.

In the foregoing implementation, the first entity at the second layer and the second entity at the second layer belong to the same first apparatus, in other words, the foregoing implementation is applicable to a carrier aggregation scenario. The first entity at the second layer belongs to the first apparatus, and the second entity at the second layer belongs to the second apparatus, in other words, the foregoing implementation is applicable to a dual connectivity scenario.

With reference to any one of the first aspect or the implementations of the first aspect, in some other possible implementations, the first apparatus and the second apparatus are of a same standard.

With reference to any one of the first aspect or the implementations of the first aspect, in some other possible implementations, the first apparatus and the second apparatus are access network devices of a fifth generation (5th generation, 5G) standard.

With reference to any one of the first aspect or the implementations of the first aspect, in some other possible implementations, the first apparatus and the second apparatus are of different standards.

With reference to any one of the first aspect or the implementations of the first aspect, in some other possible implementations, the first apparatus is an access network device of a 5G standard, and the second apparatus is an access network device of a 4G (4th generation, 4G) standard; or the first apparatus is an access network device of a 4G standard, and the second apparatus is an access network device of a 5G standard.

With reference to any one of the first aspect or the implementations of the first aspect, in some other possible implementations, the first apparatus and the second apparatus are two access network devices connected to a same terminal device in a dual connectivity scenario.

With reference to any one of the first aspect or the implementations of the first aspect, in some other possible implementations, the method further includes: The entity at the first layer of the first apparatus determines that a frequency domain duplication function is enabled. To be specific, when the frequency domain duplication function of the first layer of the first apparatus is enabled, the entity at the first layer of the first apparatus sends the first data through the first entity at the second layer, and sends the first data through the second entity at the second layer.

Based on the foregoing implementation, the entity at the first layer of the first apparatus may send the same data on a plurality of links or a plurality of carriers when the frequency domain duplication function is enabled, and send one piece of data on a single link or a single carrier when the frequency domain duplication function is not enabled. This helps achieve a balance between downlink data transmission reliability and a resource waste.

With reference to any one of the first aspect or the implementations of the first aspect, in some other possible implementations, that the entity at the first layer of the first apparatus sends the first data through the first entity at the second layer includes: The entity at the first layer of the first apparatus sends the first data to the first entity at the second layer; and the first entity at the second layer sends the first data through a first entity at a third layer, and sends the first data through a second entity at the third layer.

Based on the foregoing implementation, the first data may be duplicated at a plurality of protocol layers. In this way, the first apparatus can send the same data on more links or more carriers, to simultaneously transmit the same data on more idle air interface resources. This further reduce packet loss and transmission delay, further ensure data transmission reliability of a service, and improve user experience of the service.

With reference to any one of the first aspect or the implementations of the first aspect, in some other possible implementations, the first data is user plane data.

With reference to any one of the first aspect or the implementations of the first aspect, in some other possible implementations, the method further includes: The entity at the first layer receives second data, where the second data is control plane data; and the entity at the first layer sends the second data through the first entity at the second layer, where the first entity at the second layer is a master entity corresponding to a primary link or a primary component carrier.

According to a second aspect, a communication method is provided. The method includes: A first entity at a second layer of a third apparatus receives first data, and sends the first data to an entity at a first layer of the third apparatus; a second entity at the second layer receives the first data, and sends the first data to the entity at the first layer; and the entity at the first layer processes the first data from the first entity at the second layer and the first data from the second entity at the second layer.

For example, the third apparatus may be a terminal device. Unless otherwise specified, the "terminal device" may be a terminal device itself, or may be a module or a unit that can support the terminal device in implementing a function of the terminal device.

According to the foregoing method, both the first entity at the second layer and the second entity at the second layer of the third apparatus may receive the first data, in other words, the third apparatus may receive the same data on a plurality of links or a plurality of carriers. In this way, the first data can be simultaneously transmitted on idle air interface resources corresponding to the plurality of links or the plurality of carriers. For example, when the plurality of links include a new radio transmission link and a long term evolution transmission link, the first data can be simultaneously transmitted on idle air interface resources of new radio and long term evolution. Therefore, in the foregoing method, the idle air interface resources can be used as much as possible through redundant data transmission, to reduce packet loss and transmission delay, ensure data transmission reliability of a service, and help improve user experience of the service.

With reference to the second aspect, in some possible implementations, the processing includes reordering processing and/or duplicate packet processing.

With reference to any one of the second aspect or the implementations of the second aspect, in some other possible implementations, the first layer is a PDCP layer, and the second layer is an RLC layer; the first layer is an RLC layer, and the second layer is a MAC layer; or the first layer is a MAC layer, and the second layer is a PHY layer.

With reference to any one of the second aspect or the implementations of the second aspect, in some other possible implementations, that the first entity at the second layer of the third apparatus receives the first data includes: The first entity at the second layer receives the first data from a first apparatus; and that the second entity at the second layer of the third apparatus receives the first data includes: The first entity at the second layer receives the first data from the first apparatus. Alternatively, that the first entity at the second layer of the third apparatus receives the first data includes: The first entity at the second layer receives the first data from the first apparatus; and that the second entity at the second layer of the third apparatus receives the first data includes: The second entity at the second layer receives the first data from a second apparatus.

In the foregoing implementation, both the first entity at the second layer and the second entity at the second layer of the third apparatus receive the first data from the first apparatus, in other words, the foregoing implementation is applicable to a carrier aggregation scenario. The first entity at the second layer of the third apparatus receives the first data from the first apparatus, and the second entity at the second layer of the third apparatus receives the first data from the second apparatus, in other words, the foregoing implementation is applicable to a dual connectivity scenario.

With reference to any one of the second aspect or the implementations of the second aspect, in some other possible implementations, the first apparatus and the second apparatus are of a same standard.

With reference to any one of the second aspect or the implementations of the second aspect, in some other possible implementations, the first apparatus and the second apparatus are two access network devices of a 5G standard that are connected to a same third apparatus in a dual connectivity scenario.

With reference to any one of the second aspect or the implementations of the second aspect, in some other possible implementations, the first apparatus and the second apparatus are of different standards.

With reference to any one of the second aspect or the implementations of the second aspect, in some other possible implementations, the first apparatus and the second apparatus are two access network devices connected to a same terminal device in a dual connectivity scenario, where the first apparatus is an access network device of a 5G standard, and the second apparatus is an access network device of a 4G standard; or the first apparatus is an access network device of a 4G standard, and the second apparatus is an access network device of a 5G standard.

With reference to any one of the second aspect or the implementations of the second aspect, in some other possible implementations, the first data is user plane data.

With reference to any one of the second aspect or the implementations of the second aspect, in some other possible implementations, before the first entity at the second layer sends the first data to the entity at the first layer of the third apparatus, the method further includes: The first entity at the second layer performs reordering processing and/or duplicate packet processing on the first data; and/or before the second entity at the second layer sends the first data to the entity at the first layer of the third apparatus, the method further includes: The second entity at the second layer performs reordering processing and/or duplicate packet processing on the first data.

Based on the foregoing implementation, time for processing the first data by the entity at the first layer of the third apparatus can be reduced. In addition, because the first entity at the second layer of the third apparatus and the second entity at the second layer of the third apparatus can simultaneously perform reordering processing and/or duplicate packet processing on the first data, overall data processing time can be reduced.

According to a third aspect, a communication apparatus is provided. The apparatus is configured to perform the method provided in any one of the foregoing aspects or the implementations of the foregoing aspects. Specifically, the apparatus may include a unit and/or a module configured to perform the method provided in any one of the foregoing aspects or the implementations of the foregoing aspects, for example, a processing unit and/or a transceiver unit. The processing unit is configured to perform processing steps in the method provided in any one of the foregoing aspects or the implementations of the foregoing aspects. The transceiver unit is configured to perform receiving and sending steps in the method provided in any one of the foregoing aspects or the implementations of the foregoing aspects.

In an implementation, the apparatus is a first apparatus or a third apparatus. When the communication apparatus is the first apparatus or the third apparatus, the transceiver unit may be a transceiver, an input/output interface, or a communication interface; and the processing unit may be at least one processor. For example, the transceiver is a transceiver circuit. For example, the input/output interface may be an input/output circuit.

In another implementation, the apparatus is a chip, a chip system, or a circuit used in the first apparatus or the third apparatus. When the communication apparatus is the chip, the chip system, or the circuit used in the first apparatus or the third apparatus, the transceiver unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fourth aspect, a communication apparatus is provided. The apparatus includes: a memory, configured to store a program; and at least one processor, configured to execute a computer program or instructions stored in the memory, to perform the method provided in any one of the foregoing aspects or the implementations of the foregoing aspects.

In an implementation, the apparatus is a first apparatus or a third apparatus.

In another implementation, the apparatus is a chip, a chip system, or a circuit used in the first apparatus or the third apparatus.

According to a fifth aspect, a communication apparatus is provided. The apparatus includes at least one processor and a communication interface. The at least one processor is configured to obtain, through the communication interface, a computer program or instructions stored in a memory, to perform the method provided in any one of the foregoing aspects or the implementations of the foregoing aspects. The communication interface may be implemented by using hardware or software.

In an implementation, the apparatus further includes the memory.

According to a sixth aspect, a processor is provided, and is configured to perform the methods provided in the foregoing aspects.

Unless otherwise specified, or if operations such as sending and obtaining/receiving related to the processor do not conflict with actual functions or internal logic of the operations in related descriptions, the operations may be understood as operations such as outputting, receiving, and inputting of the processor, or may be understood as sending and receiving operations performed by a radio frequency circuit and an antenna. This is not limited in this application.

According to a seventh aspect, a computer-readable storage medium is provided. The computer-readable storage medium stores program code to be executed by a device. The program code is used to perform the method provided in any one of the foregoing aspects or the implementations of the foregoing aspects.

According to an eighth aspect, a computer program product including instructions is provided. When the instructions are run on a computer, the computer is caused to perform the method provided in any one of the foregoing aspects or the implementations of the foregoing aspects.

According to a ninth aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by using hardware or software.

For example, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

When the method provided in this application is performed by the chip, a quantity of chips that specifically implement the method in this application is not limited in this application. For example, the method may be performed by one chip, or may be performed by two or more chips. In addition, when there are two or more chips that implement the method in this application, a chip vendor is not limited. The chips may be from a same vendor or from different vendors.

According to a tenth aspect, a communication system is provided. The system includes at least one of the foregoing first apparatus, second apparatus, or third apparatus.

For example, the first apparatus may be a first access network device. For example, the second apparatus may be a second access network device. For example, the third apparatus may be a terminal device.

According to an eleventh aspect, a computer program is provided. When the computer program is run on a computer, the method provided in any one of the foregoing aspects or the implementations of the foregoing aspects is performed.

### BRIEF DESCRIPTION OF DRAWINGS

FIG. 1 is a diagram of an architecture of a communication system 1000 to which embodiments of this application may be applied;
FIG. 2 is a diagram of a data split mode in dual connectivity (dual connectivity, DC);
FIG. 3 is a diagram of a data split mode in carrier aggregation (carrier aggregation, CA);
FIG. 4 is a schematic flowchart of a communication method 500 according to an embodiment of this application;
FIG. 5a and FIG. 5b are diagrams of PDCP processing on an access network device side in DC scenarios;
FIG. 6 is a schematic flowchart of sending a service by a PDCP entity on an access network device side in a DC scenario;
FIG. 7 is a diagram of RLC processing on an access network device side in a CA scenario;
FIG. 8 is a diagram of MAC processing on an access network device side in a CA scenario;
FIG. 9 is a schematic flowchart 1 of sending a service by an RLC entity on an access network device side in a CA scenario;
FIG. 10 is a schematic flowchart 2 of sending a service by an RLC entity on an access network device side in a CA scenario;
FIG. 11 is a schematic flowchart of a communication method 1200 according to an embodiment of this application;
FIG. 12 is a diagram of an overall procedure of RLC processing, in an unacknowledged mode (unacknowledged mode, UM), on a terminal device side;
FIG. 13 is a diagram of a specific procedure of RLC processing, in a UM, on a terminal device side;
FIG. 14 is a diagram of an overall procedure of RLC processing, in an acknowledged mode (acknowledged mode, AM), on a terminal device side;
FIG. 15a and FIG. 15b are a diagram of a specific procedure of RLC processing, in an AM, on a terminal device side;
FIG. 16 is a diagram of a structure of an apparatus according to an embodiment of this application;
FIG. 17 is a diagram of another structure of an apparatus according to an embodiment of this application; and
FIG. 18 is a diagram of a chip system according to an embodiment of this application.

### DESCRIPTION OF EMBODIMENTS

For ease of understanding of embodiments of this application, before embodiments of this application are described, the following several points are described first.

An "indication" includes a direct indication (also referred to as an explicit indication) and an implicit indication. Directly indicating information A means including the information A. Implicitly indicating the information A means indicating the information A by using a correspondence between the information A and information B and directly indicating the information B. The correspondence between the information A and the information B may be predefined, prestored, pre-burned, or preconfigured. That information C is for determining information D includes: The information D is determined based only on the information C, and the information D is determined based on the information C and other information. In addition, that the information C is for determining the information D may further include an indirect determining case. For example, the information D is determined based on information E, and the information E is determined based on the information C. That "a network element A sends information A to a network element B" may be understood as that a destination end of the information A or an intermediate network element on a transmission path to the destination end is the network element B, and may include directly or indirectly sending the information to the network element B. That "the network element B receives the information A from the network element A" may be understood as that a source end of the information A or an intermediate network element on a transmission path to the source end is the network element A, and may include directly or indirectly receiving the information from the network element A. Information may undergo necessary processing, for example, a format change, between a source end for sending the information and a destination end. However, the destination end may understand valid information from the source end. Various numbers such as first and second are merely used for differentiation for ease of description, and are not used to limit the scope of embodiments of this application, for example, to distinguish between different messages and different information. A related "protocol" may be a standard protocol in the communication field, for example, may include a long term evolution (long term evolution, LTE) protocol, a new radio (new radio, NR) protocol, and a related protocol applied to a future communication system. This is not limited in this application. The words such as "for example", "example", and "in an (another) example" represent giving an example, an illustration, or a description. Any embodiment or design scheme described as an "example" in this application should not be explained as being more preferred or having more advantages than another embodiment or design scheme. The terms "include", "contain", "have", and their variants all mean "include but are not limited to", unless otherwise specifically emphasized in another manner. "A plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form. Descriptions such as "when...", "in a case of...", "if", and "assuming" all mean that a device performs corresponding processing in a specific objective situation, where time is not limited, the device is not necessarily required to perform a determining action during implementation, and there are no other limitations.

In addition, a network architecture and a service scenario described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

The following describes communication systems to which embodiments of this application may be applied.

Embodiments of this application can be applied to various communication systems, for example, an LTE system, a frequency division duplex (frequency division duplex, FDD) system, a time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5G system, an NR system, or a future communication system. The 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a device-to-device (device-to-device, D2D) communication system, a machine to machine (machine to machine, M2M) communication system, an internet of things (internet of Things, IoT) communication system, a vehicle to everything (vehicle to everything, V2X) communication system, an uncrewed aerial vehicle (uncrewed aerial vehicle, UAV) communication system, or another communication system.

A device in a communication system may send a signal to another device or receive a signal from another device. The signal may include information, signaling, data, or the like. The device may alternatively be replaced with an entity, a network entity, a communication device, a communication module, a node, a communication node, or the like. In this application, the device is used as an example for description. For example, the communication system may include at least one terminal device and at least one network device. The network device may send a downlink signal to the terminal device, and/or the terminal device may send an uplink signal to the network device.

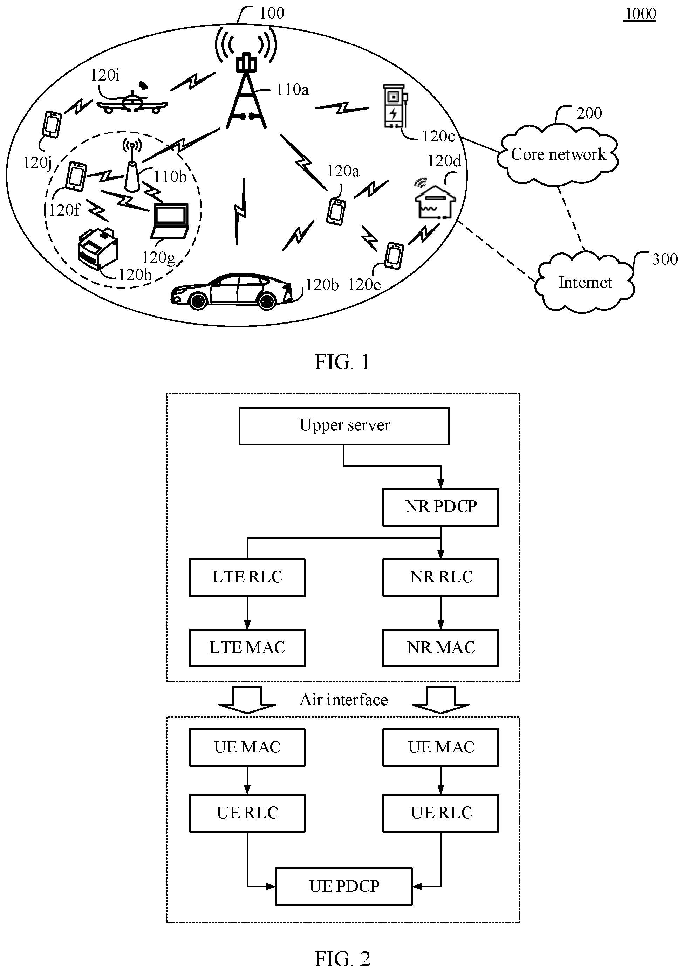

For example, FIG. 1 is a diagram of an architecture of a communication system 1000 to which embodiments of this application are applied. As shown in FIG. 1, the communication system includes a radio access network 100 and a core network 200. In a possible implementation, the communication system 1000 may further include an internet 300. The RAN 100 may include at least one radio access network device (for example, 110a and 110b in FIG. 1), and may further include at least one terminal device (for example, 120a to 120j in FIG. 1). The terminal device is connected to the radio access network device in a wireless manner, and the radio access network device is connected to the core network in a wireless or wired manner. A core network device and the radio access network device may be different independent physical devices, or functions of the core network device and logical functions of the radio access network device may be integrated into a same physical device, or some functions of the core network device and some functions of the radio access network device may be integrated into one physical device. Terminal devices may be connected to each other in a wired or wireless manner, and radio access network devices may be connected to each other in a wired or wireless manner. FIG. 1 is merely a diagram. The communication system may further include other network devices, for example, may further include a wireless relay device and a wireless backhaul device, which are not shown in FIG. 1.

The terminal device in the communication system 1000 may also be referred to as a terminal, user equipment (user equipment, UE), a mobile station, a mobile terminal, or the like. The terminal device may be widely used in various scenarios, for example, D2D, V2X, MTC, IoT, virtual reality, augmented reality, industrial control, autonomous driving, remote medical, smart grid, smart furniture, smart office, smart wearable, smart transportation, and smart city. The terminal device may be a mobile phone, a tablet computer, a computer having a wireless transceiver function, a wearable device, a vehicle, an uncrewed aerial machine, a helicopter, an airplane, a ship, a robot, a robotic arm, a smart home device, or the like. A device form of the terminal device is not limited in embodiments of this application.

The radio access network 100 may be a cellular system related to the 3rd generation partnership project (3rd generation partnership project, 3GPP), for example, a 4G mobile communication system, a 5G mobile communication system, or a future-oriented evolved system. Alternatively, the radio access network 100 may be an open access network (open RAN, O-RAN or ORAN) or a cloud radio access network (cloud radio access network, CRAN). Alternatively, the radio access network 100 may be a communication system integrating the foregoing two or more systems.

The radio access network device, sometimes may also be referred to as a radio access network node, a radio access network entity, an access node, or the like, is a part of the communication system, and is configured to help the terminal device implement radio access. A plurality of radio access network devices in the communication system 1000 may be nodes of a same type, or may be nodes of different types.

In a possible scenario, the radio access network device may be a base station (base station), an evolved NodeB (evolved NodeB, eNodeB), an access point (access point, AP), a transmission reception point (transmission reception point, TRP), a next generation NodeB (next generation NodeB, gNB), a base station in a future mobile communication system, or the like. The RAN node may be a macro base station (for example, 110a in FIG. 1), a micro base station or an indoor base station (for example, 110b in FIG. 1), a relay node or a donor node, or a radio controller in a CRAN scenario. For example, the radio access network node may alternatively be a server, a wearable device, a vehicle, or a vehicle-mounted device. For example, an access network device in a V2X technology may be a road side unit (road side unit, RSU).

In another possible scenario, a plurality of radio access network devices cooperate to assist the terminal device in implementing radio access, and different radio access network devices separately implement some functions of a base station. For example, the radio access network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), a radio frequency unit (radio frequency unit, RFU), an active antenna unit (active antenna unit, AAU), or a remote radio head (remote radio head, RRH).

In different systems, the CU, the DU, or the RU may alternatively have different names, but a person skilled in the art may understand meanings thereof. For example, in an ORAN system, the CU may also be referred to as an open-CU (open-CU, O-CU), the DU may also be referred to as an open-DU (open-DU, O-DU), and the RU may also be referred to as an open-RU (open-RU, O-RU). Any one of the CU, the DU, and the RU may be implemented by using a software module, a hardware module, or a combination of a software module and a hardware module.

A specific technology and a specific device form that are used by the radio access network device are not limited in embodiments of this application. For ease of description, an access network device is short for the radio access network device.

The base station and the terminal device may be fixed or movable. The base station and the terminal device may be deployed on land, where the deployment includes indoor or outdoor, or hand-held or vehicle-mounted deployment; may be deployed on water; or may be deployed on an airplane, a balloon, or an artificial satellite. Application scenarios of the base station and the terminal device are not limited in embodiments of this application.

Roles of the base station and the terminal device may be relative. For example, a helicopter or an uncrewed aerial vehicle 120i in FIG. 1 may be configured as a mobile base station. For those terminal devices 120j accessing the radio access network 100 through 120i, the terminal device 120i is a base station. However, for the base station 110a, 120i is a terminal device, that is, communication between 110a and 120i is performed according to a wireless air interface protocol. Certainly, communication between 110a and 120i may alternatively be performed according to an interface protocol between base stations. In this case, for 110a, 120i is also a base station. Therefore, the base station and the terminal device may be collectively referred to as communication apparatuses, 110a and 110b in FIG. 1 may be referred to as communication apparatuses having a base station function, and 120a to 120j in FIG. 1 may be referred to as communication apparatuses having a terminal device function.

Communication between a base station and a terminal device, between base stations, or between terminal devices may be performed by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as smart grid, industrial control, smart transportation, and smart city. A function of the terminal device may alternatively be performed by a module (for example, a chip or a modem) in the terminal device, or may be performed by an apparatus including the function of the terminal device.

It should be understood that the network architecture shown above is merely an example for description, and the network architecture applicable to embodiments of this application is not limited thereto. Any network architecture that can implement functions of the foregoing network elements is applicable to embodiments of this application.

It should be further understood that the foregoing names are defined merely for ease of distinguishing between different functions, and should not constitute any limitation on this application. This application does not exclude a possibility of using other names in other future networks.

For ease of understanding of embodiments of this application, several concepts or terms in embodiments of this application are briefly described below.

The concepts or the terms described below are described based on concepts or terms specified in a protocol. However, this does not mean that embodiments of this application can be applied only to a current existing system, and the concepts or the terms in embodiments of this application can be applied to a future system. In addition, specific names of the concepts or the terms (for example, concepts or terms related to functional descriptions) may be adjusted with development of the future system.

### 1. Dual connectivity

In dual connectivity (DC), one terminal device may communicate with a plurality of base stations, and a network side may provide a communication service for the terminal device by using resources of the plurality of base stations.

In the DC, the plurality of base stations may be base stations using a same radio access technology (radio access technology, RAT), for example, all are 4G base stations or all are 5G base stations. In the DC, the plurality of base stations may alternatively be base stations using different RATs. The DC is referred to as multi-RAT dual connectivity (multi-RAT dual connectivity, MR-DC). For example, one base station is a 4G base station, and another base station is a 5G base station. A 4G RAT is also referred to as evolved universal terrestrial radio access (evolved universal terrestrial radio access, E-UTRA), and a 5G RAT is also referred to as NR. The MR-DC includes DC between E-UTRA and NR (E-UTRA-NR DC, EN-DC), DC between E-UTRA and NR of an NG-RAN (NG-RAN E-UTRA-NR DC, NGEN-DC), DC between NR and E-UTRA (NR-E-UTRA DC, NE-DC), and DC between NR and NR (NR-NR DC, NR-DC). In the EN-DC, a master base station connected to a 4G core network is an LTE base station eNB, and a secondary base station is an NR base station gNB. In the NGEN-DC, a master base station connected to a 5G core network (5G core, 5GC) is an LTE base station ng-eNB, and a secondary base station is an NR base station gNB. In the NE-DC, a master base station connected to a 5GC is an NR base station gNB, and a secondary base station is an LTE base station ng-eNB. In the NR-DC, a master base station connected to a 5GC is an NR base station gNB, and a secondary base station is an NR base station gNB.

In the DC, one PDCP entity may be associated with a plurality of RLC entities. The plurality of RLC entities may be disposed on a plurality of base stations. Each RLC entity may be associated with one or more MAC entities. Data from an upper layer may be split at the PDCP entity and sent through one of the plurality of associated RLC entities.

EN-DC is used as an example. FIG. 2 shows a data split mode in DC. In FIG. 2, an Option3X architecture is used as an example. One PDCP entity is associated with two RLC entities of different standards. For example, as shown in FIG. 2, an NR PDCP entity is associated with an LTE RLC entity and an NR RLC entity, and each of the two RLC entities is associated with one MAC entity. For example, as shown in FIG. 2, the LTE RLC entity is associated with one LTE MAC entity, and the NR RLC entity is associated with one NR MAC entity. Data from an upper server (upper server) arrives at the NR PDCP entity through an NR S1-U interface, and is split at a PDCP layer. Data sent by the NR PDCP entity is sent to one of the LTE RLC entity and the NR RLC entity, and is further sent through an associated MAC entity. The data arrives at one MAC entity of a terminal device through an air interface, and is further aggregated to a PDCP entity through an associated RLC entity.

It can be learned from the foregoing content that in DC, data from an upper layer is split at a PDCP layer, and is sent to one of a plurality of associated RLC entities. When channel quality of a communication link corresponding to the RLC entity is poor, a packet loss rate and transmission delay of an entire service are increased, because a packet loss status and a delay status of the single link correspond to a packet loss status and a delay status of the entire service.

### 2. Carrier aggregation

In carrier aggregation (CA), a plurality of component carriers (component carriers, CCs) can be aggregated together to increase a transmission bandwidth. In the CA, one PDCP entity may be associated with one RLC entity. One RLC entity may be associated with a plurality of MAC entities. Data from an upper layer may be split at the RLC entity and sent through one of the plurality of associated MAC entities.

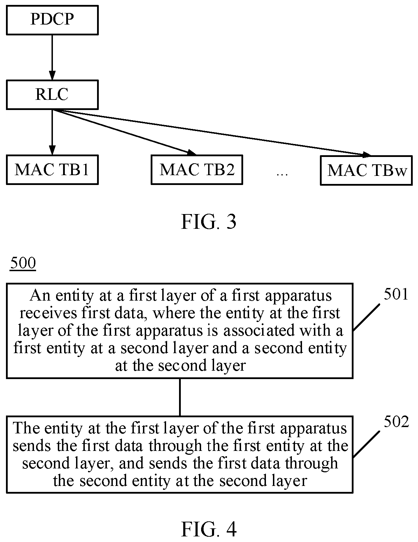

FIG. 3 shows a data split mode in CA. As shown in FIG. 3, one PDCP entity is associated with one RLC entity. The RLC entity is associated with w MAC entities, where w is a positive integer. Data from an upper layer may be split at an RLC layer, and data sent by the RLC entity is transmitted through one of the w MAC entities.

It can be learned from the foregoing content that, in CA, data from an upper layer is split at an RLC entity, and is sent through one of a plurality of associated MAC entities. When channel quality of a carrier corresponding to the MAC entity is poor, a packet loss rate and transmission delay of an entire service are increased, because a packet loss status and a delay status of the single carrier correspond to a packet loss status and a delay status of the entire service.

The concepts or the terms described above are described based on concepts or terms specified in a protocol. However, this does not mean that embodiments of this application can be applied only to a current existing system, and the concepts or the terms in embodiments of this application can be applied to a future system. In addition, specific names of the concepts or the terms (for example, concepts or terms related to functional descriptions) may be adjusted with development of the future system.

It can be learned from the foregoing content that, in DC or CA, a packet loss rate and transmission delay of a service depend on channel quality of a single link or a single carrier. When the channel quality of the single link or the single carrier is poor, the packet loss rate and the transmission delay of the entire service are increased. Especially in a weak coverage scenario, poor channel quality of a single link or a single carrier directly causes data packet loss and large air interface delay. A packet loss rate and transmission delay are important factors that affect user experience of a service. An increase in the packet loss rate and an increase in the transmission delay lead to user experience degrading of the service.

Table 1 shows a set of data about effects of a packet loss rate and delay jitter on user experience. A mean opinion score (mean opinion score, MOS) may be used as an indicator for measuring service quality or user experience, and a higher MOS indicates better service quality or user experience.

**Table 1**

| | M | | | | | | N | | | | | |
|---|---|---|---|---|---|---|---|---|---|---|---|---|
| | Total quantity | Sampling rate (%) | Average MOS | P10 MOS | RTP packet loss rate (%) | delay RTP jitter (ms) | Total quantity | Sampling rate (%) | Average MOS | P10 MOS | RTP packet loss rate (%) | delay RTP jitter (ms) |
| Steady-state sample | 298 | / | 4.43 | 4.09 | 0.09 | 121.09 | 543 | / | 4.35 | 3.79 | 0.15 | 121.17 |

It can be learned from Table 1 that, a real-time transport protocol (real-time transport protocol, RTP) packet loss rate 0.09 in the M sets of data is lower than an RTP packet loss rate 0.15 in the N sets of data, RTP delay jitter (jitter) 121.09 ms in the M sets of data is lower than RTP delay jitter 121.17 ms in the N sets of data, and an average MOS 4.43 in the M sets of data is higher than an average MOS 4.35 in the N sets of data, that is, in a case of a low packet loss rate and low delay jitter, service quality or user experience is better.

For the foregoing problem, this application provides a communication method and a communication apparatus, so that idle air interface resources can be used to a maximum extent through redundant data transmission, to reduce packet loss and transmission delay, ensure reliability of downlink data transmission of a service, and help improve user experience of the service.

Embodiments of this application are applicable to transmission of downlink data of various services, for example, transmission of downlink data of a small packet service.

The following describes method embodiments of this application.

It should be noted that an "entity at a first layer", "entity at a second layer", or "entity at a third layer" in embodiments of this application may also be respectively described as a "first layer", "second layer", or "third layer"; or a "first protocol layer", "second protocol layer", or "third protocol layer"; or a "first-layer entity", "second-layer entity", or "third-layer entity", or the like. This is not limited below, and the "entity at the first layer", "entity at the second layer", or "entity at the third layer" is used for description below. The "first layer", "second layer", or "third layer" may be logical layers.

It should be further noted that the "entity at the first layer", "entity at the second layer", or "entity at the third layer" may belong to a same device. For example, the "entity at the first layer", "entity at the second layer", or "entity at the third layer" are different modules of a same device. For example, entities at different protocol layers of an access network device or a terminal device may be different modules of the access network device or the terminal device. The "entity at the first layer", "entity at the second layer", or "entity at the third layer" may alternatively belong to different devices. For example, entities at different protocol layers of an access network device or a terminal device may be independently disposed.

FIG. 4 is a schematic flowchart of a communication method 500 according to an embodiment of this application.

The method 500 may be performed by a first apparatus. Unless otherwise specified, the "first apparatus" may be a first apparatus itself, or may be a module or unit that can support the first apparatus in implementing a function of the first apparatus. The method 500 includes at least a part of the following content.

Step 501: An entity at a first layer of the first apparatus receives first data.

For example, the entity at the first layer of the first apparatus receives the first data from an entity at an upper layer of the first layer.

The entity at the first layer of the first apparatus is associated with a plurality of entities at a second layer. An example in which the entity at the first layer of the first apparatus is associated with a first entity at the second layer and a second entity at the second layer is merely used below for description. This embodiment of this application is applicable to a scenario in which the entity at the first layer of the first apparatus is associated with more entities at the second layer, for example, a scenario in which the entity at the first layer of the first apparatus is associated with three entities at the second layer, or a scenario in which the entity at the first layer of the first apparatus is associated with four entities at the second layer.

That the entity at the first layer of the first apparatus is associated with the first entity at the second layer and the second entity at the second layer may be understood as follows: The entity at the first layer of the first apparatus may receive and send data through the first entity at the second layer and the second entity at the second layer.

In embodiments of this application, the first entity at the second layer and the second entity at the second layer that are associated with the entity at the first layer of the first apparatus may belong to a same apparatus, or may belong to different apparatuses. This is not limited. For example, in DC, the first entity at the second layer may belong to the first apparatus, and the second entity at the second layer may belong to a second apparatus. For example, in CA, both the first entity at the second layer and the second entity at the second layer may belong to the first apparatus.

A standard of the first apparatus and/or a standard of the second apparatus, or a RAT used by the first apparatus and/or a RAT used by the second apparatus are/is not limited in this embodiment of this application. For example, the first apparatus and/or the second apparatus may be 4G access network devices/a 4G access network device, or 5G access network devices/a 5G access network device.

In addition, the first apparatus and the second apparatus may be of a same standard. For example, both the first apparatus and the second apparatus in the DC may be 5G access network devices, for example, NR-DC. The first apparatus and the second apparatus may alternatively be of different standards. For example, DC in which the first apparatus is a 5G access network device and the second apparatus is a 4G access network device is, for example, NE-DC. For another example, DC in which the first apparatus is a 4G access network device and the second apparatus is a 5G access network device is, for example, EN-DC.

That the first apparatus and/or the second apparatus are/is apparatuses/an apparatus of a specific standard may be understood as follows: The first apparatus and/or the second apparatus use/uses or support/supports a RAT corresponding to the standard, or the first apparatus and/or the second apparatus support/supports a service of the standard, or the like.

Specific protocol layers of the first layer and the second layer are not limited in this embodiment of this application.

For example, the first layer is a PDCP layer, and the second layer is an RLC layer. To be specific, a PDCP entity of the first apparatus receives a PDCP service data unit (service data unit, SDU) from an upper layer, and the PDCP entity of the first apparatus is associated with a first RLC entity and a second RLC entity, where the PDCP SDU includes the first data.

For example, the first layer is an RLC layer, and the second layer is a MAC layer. To be specific, an RLC entity of the first apparatus receives an RLC SDU from an upper layer (for example, a PDCP layer), and the RLC entity of the first apparatus is associated with a first MAC entity and a second MAC entity, where the RLC SDU includes the first data.

For example, the first layer is a MAC layer, and the second layer is a PHY layer. To be specific, a MAC entity of the first apparatus receives a MAC SDU from an upper layer (for example, an RLC layer), and the MAC entity of the first apparatus is associated with a first PHY entity and a second PHY entity, where the MAC SDU includes the first data.

A type of the first data is not limited in this embodiment of this application. For example, the first data is user plane data, for example, data carried in a data protocol data unit (data protocol data unit, data PDU). For example, the first data is control plane data, for example, data carried in a control protocol data unit (data protocol data unit, control PDU).

Step 502: The entity at the first layer of the first apparatus sends the first data through the first entity at the second layer, and sends the first data through the second entity at the second layer.

For example, after receiving the first data, the entity at the first layer of the first apparatus may duplicate the first data, send the original first data through the first entity at the second layer, and send, through the second entity at the second layer, the duplicated first data.

For example, when the first data is downlink data, the entity at the first layer of the first apparatus may send the first data to a terminal device through the first entity at the second layer, and send the first data to the terminal device through the second entity at the second layer.

It should be noted that, the first data in the method 500 may be payload data or a payload (payload). In this case, that the entity at the first layer of the first apparatus duplicates the first data may mean that the entity at the first layer of the first apparatus duplicates data to which a header of the first layer is added, where the data to which the header of the first layer is added includes the first data. In this way, the original data and the duplicated data include the same header of the first layer and the first data. In addition, in a process in which the entity at the first layer of the first apparatus sends the first data through the first entity at the second layer, the entity at the second layer may also add a corresponding header to the first data.

In this way, according to the method 500, the first apparatus may send same data on a plurality of links or a plurality of carriers, to be specific, may simultaneously transmit the same data on idle air interface resources corresponding to the plurality of links or the plurality of carriers. For example, the plurality of links include an NR transmission link and an LTE transmission link. The first apparatus may simultaneously transmit the same data on idle air interface resources of NR and LTE. In this way, in the method 500, the idle air interface resources can be used as much as possible through data redundant transmission. In addition, that the first apparatus may send the same data on the plurality of links or the plurality of carriers helps reduce packet loss. For example, it is assumed that to-be-sent data includes data 1 to data 4, the plurality of links include an NR transmission link and an LTE transmission link, the data 3 is lost because packet loss occurs on data transmitted on the NR transmission link, and the data 1 to the data 4 are successfully transmitted on the LTE transmission link. In this way, a receive end device of the data may obtain all the data 1 to the data 4 by combining and restoring the data received on the two transmission links, so that packet loss can be reduced in comparison with transmitting the data 1 to the data 4 on only the NR transmission link. In addition, that the first apparatus may send the same data on the plurality of links or the plurality of carriers helps reduce transmission delay. For example, it is assumed that to-be-sent data includes data 1 to data 4, the plurality of links include an NR transmission link and an LTE transmission link; based on a current idle NR air interface resource, on the NR transmission link, only the data 1 and the data 2 can be transmitted, and the data 3 and the data 4 can be continued to be transmitted only after delay; based on a current idle LTE air interface resource, the data 1 to the data 4 can be transmitted on the LTE transmission link; and the data 1 to the data 4 are simultaneously transmitted on the two links. The receive end device of the data receives the data 1 and the data 2 on the NR transmission link, and receives the data 1 to the data 4 on the LTE transmission link. The receive end device of the data may obtain all the data 1 to the data 4 by combining and restoring the data received on the two transmission links, so that transmission delay of the data 1 to the data 4 can be reduced in comparison with transmitting the data 1 to the data 4 on only the NR transmission link. Therefore, in the method 500, idle air interface resources can be used as much as possible through redundant data transmission, to help reduce packet loss and transmission delay, ensure data transmission reliability of a service, and help improve user experience of the service.

In some other implementations, that the entity at the first layer of the first apparatus sends the first data through the first entity at the second layer may include: The entity at the first layer of the first apparatus sends the first data to the first entity at the second layer; and the first entity at the second layer sends the first data through a first entity at a third layer, and sends the first data through a second entity at the third layer. For example, the first layer is a PDCP layer, the second layer is an RLC layer, and the third layer is a MAC layer. For example, the first layer is an RLC layer, the second layer is a MAC layer, and the third layer is a PHY layer. For example, the first layer is a PDCP layer, the second layer is an RLC layer, and the third layer is a PHY layer. Based on this implementation, the first data can be duplicated at a plurality of protocol layers. In this way, the first apparatus can send the same data on more links or more carriers, to simultaneously transmit the same data on more idle air interface resources. This further reduces packet loss. In addition, that different links are used to transmit the same data avoids an overall delay reduction caused by transmission delay of one of the links when the different links are used to transmit different data. When the different links are used to transmit the same data, a status of one link does not affect integrity of a data packet finally transmitted to the terminal device, to reduce transmission delay, further ensure data transmission reliability of a service, and improve user experience of the service. Descriptions of the beneficial effects are applicable to descriptions of other similar implementations in this application. Details are not described again.

In some other implementations, the method 500 may further include: The entity at the first layer of the first apparatus determines that a frequency domain duplication function is enabled. To be specific, when the frequency domain duplication function of the first layer of the first apparatus is enabled, the entity at the first layer of the first apparatus sends the first data through the first entity at the second layer, and sends the first data through the second entity at the second layer. If the frequency domain duplication function of the first layer of the first apparatus is not enabled, the entity at the first layer of the first apparatus may send the first data through the first entity at the second layer or send the first data through the second entity at the second layer. In this way, the entity at the first layer of the first apparatus may send the same data on a plurality of links or a plurality of carriers when the frequency domain duplication function is enabled, and send one piece of data on a single link or a single carrier when the frequency domain duplication function is not enabled. This helps achieve a balance between data transmission reliability and a resource waste.

Control plane data may be sent according to the method described in steps 501 and 502. In some other implementations, the control plane data may alternatively be sent only by an entity that is at the second layer and that corresponds to a primary link or a primary component carrier. In this case, the method 500 may further include: The entity at the first layer of the first apparatus receives second data, where the second data is control plane data; and the entity at the first layer of the first apparatus sends the second data through the first entity at the second layer, where the first entity at the second layer is the entity corresponding to the primary link or the primary component carrier. For example, in EN-DC, a PDCP entity of the first apparatus receives the second data, and sends the second data through an RLC entity corresponding to a primary link or a primary component carrier.

With reference to specific scenarios, a procedure on a first apparatus side in this embodiment of this application is described below in detail by using an example in which the first apparatus is an access network device and the first data is downlink data.

### Scenario 1: DC scenario

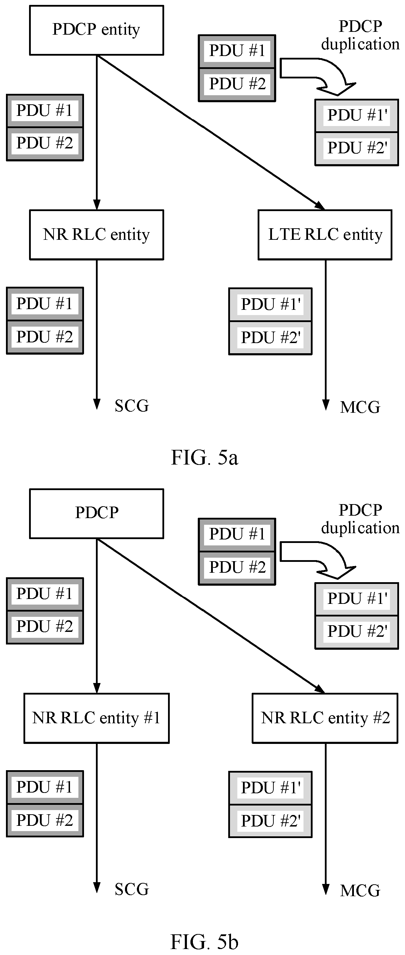

FIG. 5a and FIG. 5b are diagrams of PDCP processing on an access network device side in DC scenarios.

In FIG. 5a and FIG. 5b, PDCP processing on an access network device side is described by using EN-DC and NR-DC as examples. In FIG. 5a and FIG. 5b, a PDCP entity may correspond to the foregoing entity at the first layer, and a payload carried in a PDU may correspond to the foregoing first data. In FIG. 5a, an LTE RLC entity may correspond to the foregoing first entity at the second layer, and an NR RLC entity may correspond to the foregoing second entity at the second layer. In FIG. 5b, an NR RLC entity #2 may correspond to the foregoing first entity at the second layer, and an NR RLC entity #1 may correspond to the foregoing second entity at the second layer.

As shown in FIG. 5a, in an EN-DC scenario, a PDCP entity of an access network device may perform PDCP duplication on PDCP PDUs (for example, a PDU #1 and a PDU #2 in FIG. 5a), send the original PDCP PDUs (for example, the PDU #1 and the PDU #2 in FIG. 5a) to an NR RLC entity, and send duplicated PDCP PDUs (for example, a PDU #1' and a PDU #2' in FIG. 5a) to an LTE RLC entity, so that the original PDCP PDUs and the duplicated PDCP PDUs are separately transmitted on a secondary cell group (secondary cell group, SCG) and a master cell group (master cell group, MCG). PDCP processing on an access network device side in the EN-DC scenario is shown in FIG. 5b. PDCP processing on an access network device side in an NR-DC scenario is similar to the PDCP processing on the access network device side in the EN-DC scenario. A difference lies in that two RLC entities associated with a PDCP entity are both NR RLC entities.

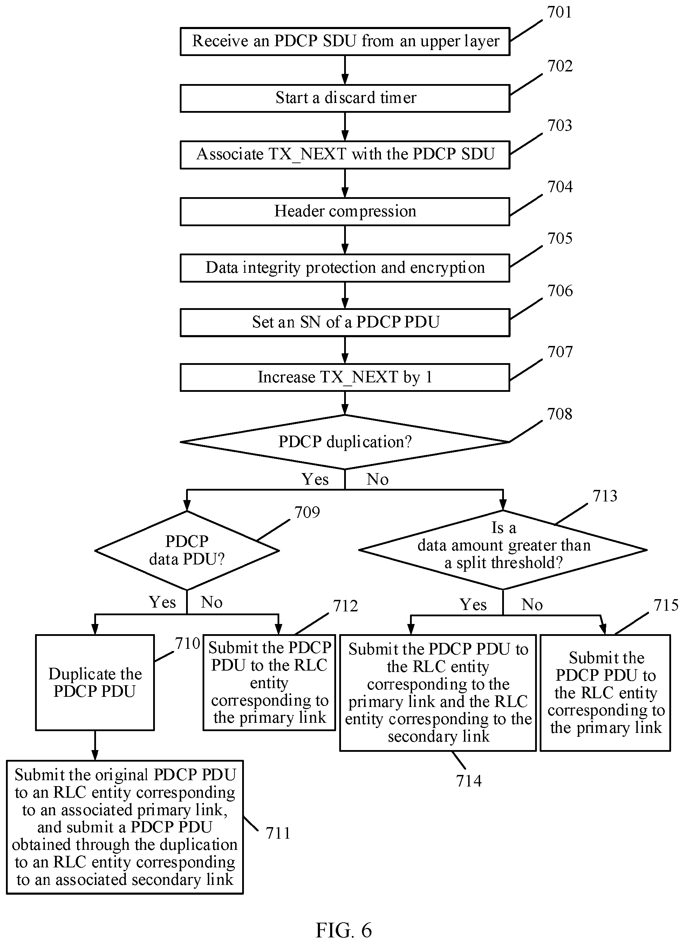

FIG. 6 is a schematic flowchart of sending a service by a PDCP entity on an access network device side in a DC scenario.

In FIG. 6, a procedure in which a PDCP entity on an access network device side sends a service is described by using EN-DC as an example. In FIG. 6, a PDCP entity may correspond to the foregoing entity at the first layer, a payload carried in a PDU or an SDU may correspond to the foregoing first data, an RLC entity corresponding to a primary link may correspond to the foregoing first entity at the second layer, and an RLC entity corresponding to a secondary link may correspond to the foregoing second entity at the second layer.

In FIG. 6, an access network device may duplicate a data packet at a PDCP layer. When sending a service, the PDCP entity may be configured as a sending PDCP entity, which is briefly referred to as a PDCP entity below.

Step 701: A PDCP entity receives a PDCP SDU from an upper layer. Descriptions in step 701 and step 501 may be mutually referenced.

Step 702: The PDCP entity starts a discard timer associated with the PDCP SDU.

Step 703: The PDCP entity associates a COUNT value corresponding to TX_NEXT with the PDCP SDU.

TX_NEXT indicates a COUNT value of a next to-be-transmitted PDCP SDU.

Step 704: The PDCP entity performs PDCP SDU header compression.

Step 705: The PDCP entity performs integrity protection for the PDCP SDU and encrypts TX_NEXT.

Step 706: The PDCP entity sets a sequence number (sequence number, SN) of a PDCP PDU.

The PDCP PDU is a PDCP PDU corresponding to the PDCP SDU.

Step 707: The PDCP entity increases TX_NEXT by 1.

Step 708: The PDCP entity determines whether PDCP duplication (PDCP duplication) is configured. In other words, the PDCP entity determines whether the PDCP duplication is activated. In other words, the PDCP entity determines whether a PDCP duplication function is enabled.

When the PDCP duplication is configured, step 709 is performed. When the PDCP duplication is not configured, step 713 is performed.

Step 709: When the PDCP duplication is configured, the PDCP entity further determines whether the PDCP PDU in step 706 is a PDCP data PDU.

When the PDCP PDU is the PDCP data PDU, step 710 is performed. When the PDCP PDU is a PDCP control PDU (PDCP control PDU), step 712 is performed.

Step 710: When the PDCP PDU is the PDCP data PDU, the PDCP entity performs PDCP duplication, and duplicates one copy of the PDCP PDU at a packet sending moment.

The duplicated PDCP PDU has the same information as the original PDCP PDU.

Step 711: The PDCP entity submits the original PDCP PDU to an associated NR RLC entity, and submits the duplicated PDCP PDU to an associated LTE RLC entity.

Descriptions in steps 711 and 712, and step 502 may be mutually referenced.

Step 712: When the PDCP PDU is the PDCP control PDU, the PDCP entity delivers the PDCP PDU to an RLC entity corresponding to a primary link.

Step 713: When the PDCP duplication is not configured, the PDCP entity determines whether a total amount of to-be-processed PDCP data and RLC data that are initially transmitted in the two associated RLC entities is greater than a split threshold.

When the total data amount is greater than the split threshold, step 714 is performed. When the total data amount is less than or equal to the split threshold, step 715 is performed.

Step 714: When the total data amount is greater than the split threshold, the PDCP entity delivers the PDCP PDU to the RLC entity corresponding to the primary link and an RLC entity corresponding to a secondary link.

Step 715: When the total data amount is less than or equal to the split threshold, the PDCP entity delivers the PDCP PDU to the RLC entity corresponding to the primary link.

In FIG. 5a, FIG. 5b, and FIG. 6, the access network device may duplicate a data packet at the PDCP layer, and distribute the original data packet and the duplicated data packet to different RLC entities for transmission. For beneficial effects of the solutions shown in FIG. 5a, FIG. 5b, and FIG. 6, refer to the beneficial effects of the method 500. Details are not described again.

### Scenario 2: CA scenario

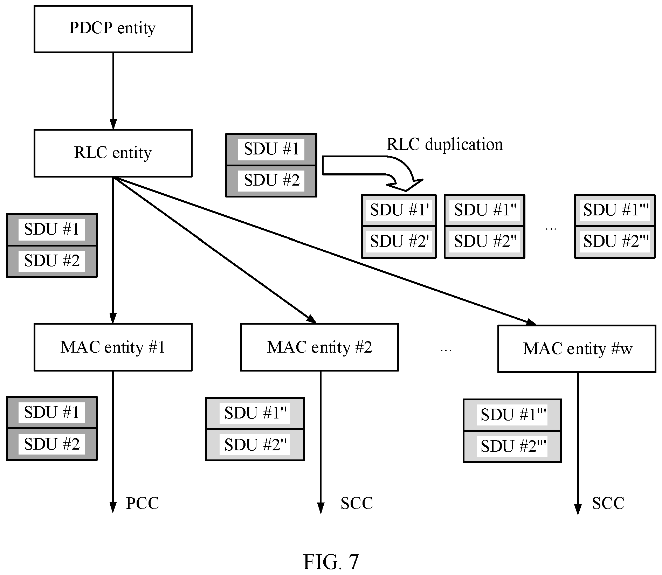

FIG. 7 is a diagram of RLC processing on an access network device side in a CA scenario.

In FIG. 7, an RLC entity may correspond to the foregoing entity at the first layer, a payload carried in an SDU may correspond to the foregoing first data, and any two of a MAC entity #1, a MAC entity #2, ..., and a MAC entity #w may correspond to the foregoing first entity at the second layer and the foregoing second entity at the second layer. As shown in FIG. 7, an RLC entity of an access network device may perform RLC duplication on SDUs (for example, an SDU #1 and an SDU #2 in FIG. 7), and send the original SDUs (for example, the SDU #1 and the SDU #2 in FIG. 7) and duplicated SDUs (for example, a PDU #1", a PDU #2", a PDU #1‴, and a PDU #2‴ in FIG. 7) to different MAC entities, so that the original SDUs and the duplicated SDUs are separately transmitted on a primary component carrier (primary component carrier, PCC) and a secondary component carrier (secondary component carrier, SCC).

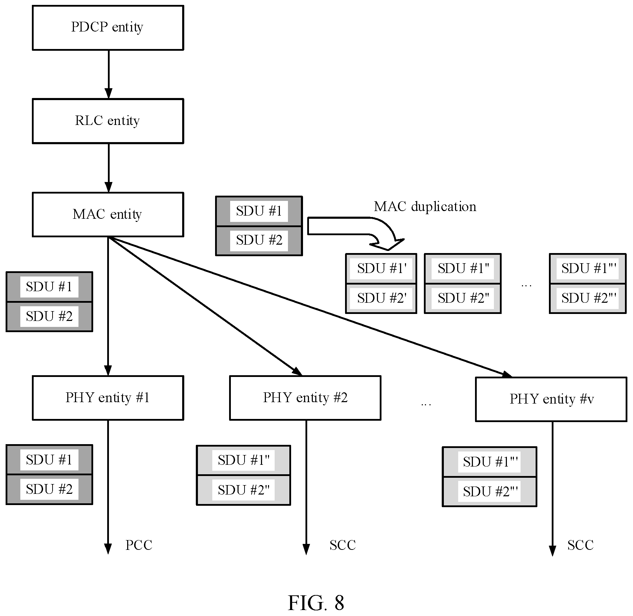

FIG. 8 is a diagram of MAC processing on an access network device side in a CA scenario.

In FIG. 8, a MAC entity may correspond to the foregoing entity at the first layer, a payload carried in an SDU may correspond to the foregoing first data, and any two of a PHY entity #1, a PHY entity #2, ..., and a PHY entity #v may correspond to the foregoing first entity at the second layer and the foregoing second entity at the second layer. Different from FIG. 7, in FIG. 8, a MAC entity of an access network device performs MAC duplication on SDUs, and sends the original SDUs and duplicated SDUs to different PHY entities, so that the original SDUs and the SDUs obtained through the duplication are separately transmitted on a PCC and an SCC.

A procedure in which a PDCP entity on an access network device side sends a service in a CA scenario is described below by using an example in which an RLC entity of an access network device performs RLC duplication on an SDU.

In the CA scenario, the RLC entity may be configured to perform data transmission in any one of the following modes: transparent mode (transparent mode, TM), UM, or AM. Embodiments of this application are applicable to the UM and the AM. A procedure in which a PDCP entity, in a UM, on an access network device side sends a service and a procedure in which a PDCP entity, in an AM, on an access network device side sends a service are separately described below.

### (1) UM

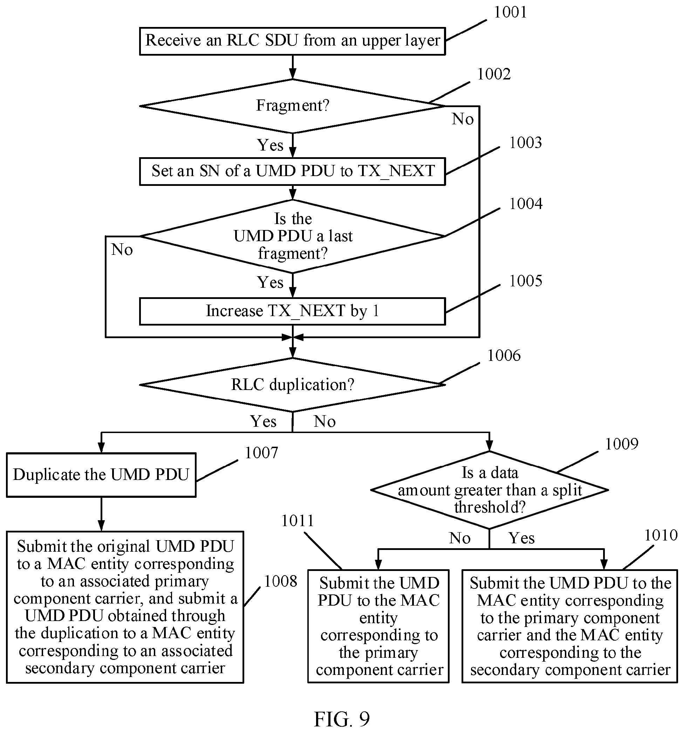

FIG. 9 is a schematic flowchart 1 of sending a service by an RLC entity on an access network device side in a CA scenario.

FIG. 9 shows a procedure in which an RLC entity, in a UM, on an access network device side sends a service. In FIG. 9, the RLC entity may correspond to the foregoing entity at the first layer, a payload carried in a PDU or an SDU may correspond to the foregoing first data, a MAC entity corresponding to a primary component carrier may correspond to the foregoing first entity at the second layer, and a MAC entity corresponding to a secondary component carrier may correspond to the foregoing second entity at the second layer.

In FIG. 9, an access network device may duplicate a data packet at an RLC layer. When sending a service, the RLC entity may be configured as a sending RLC entity, which is briefly referred to as an RLC entity below.

Step 1001: An RLC entity receives an RLC SDU from an upper layer.

The upper layer may be a PDCP layer. Descriptions in step 1001 and step 501 may be mutually referenced.

Step 1002: The RLC entity determines whether to fragment the RLC SDU.

"Fragment" may also be referred to as "segment".

When it is determined to fragment the RLC SDU, step 1003 is performed. When it is determined not to fragment the RLC SDU, step 1006 is performed.

Step 1003: The RLC entity sets an SN of a UM data (UM data, UMD) PDU to TX_NEXT.

The UMD PDU is an RLC PDU generated based on a segment of the RLC SDU, that is, whether the UMD PDU includes the segment of the RLC SDU.

Step 1004: The RLC entity determines whether the UMD PDU is a last fragment corresponding to the RLC SDU.

In other words, the RLC entity determines whether the UMD PDU is a last UMD PDU generated based on the RLC SDU.

When the UMD PDU is the last fragment corresponding to the RLC SDU, step 1005 is performed. When the UMD PDU is not the last fragment corresponding to the RLC SDU, step 1006 is performed.

Step 1005: The RLC entity increases TX_NEXT by 1.

Step 1006: The RLC determines whether RLC duplication (RLC duplication) is configured. In other words, the RLC entity determines whether the RLC duplication is activated. In other words, the RLC entity determines whether an RLC duplication function is enabled.

When the RLC duplication is configured, step 1007 is performed. When the RLC duplication is not configured, step 1009 is performed.

Step 1007: When the RLC duplication is configured, the RLC entity performs RLC duplication, and duplicates one copy of the UMD PDU at a packet sending moment.

The duplicated UMD PDU has the same information as the original UMD PDU.

Step 1008: The RLC entity submits the original PDCP PDU to a MAC entity corresponding to an associated primary component carrier, and submits the duplicated PDCP PDU to a MAC entity corresponding to an associated secondary component carrier.

Descriptions in steps 1007 and 1008, and step 502 may be mutually referenced.

Step 1009: When the RLC duplication is not configured, the RLC entity determines whether a total amount of to-be-processed RLC data and MAC data that are initially transmitted in the associated MAC entities is greater than a split threshold.

When the total data amount is less than or equal to the split threshold, step 1011 is performed. When the total data amount is greater than the split threshold, step 1010 is performed.

Step 1010: When the total data amount is greater than the split threshold, the RLC entity delivers the UDM PDU to the MAC entity corresponding to the primary component carrier and the MAC entity corresponding to the secondary component carrier.

Step 1011: When the total data amount is less than or equal to the split threshold, the RLC entity delivers the UMD PDU to the MAC entity corresponding to the primary component carrier.

In FIG. 9, the access network device may duplicate a data packet at the RLC layer, and distribute the original data packet and the duplicated data packet to different MAC entities for transmission. For beneficial effects of the solution shown in FIG. 9, refer to the beneficial effects of the method 500. Details are not described again.

### (2) AM

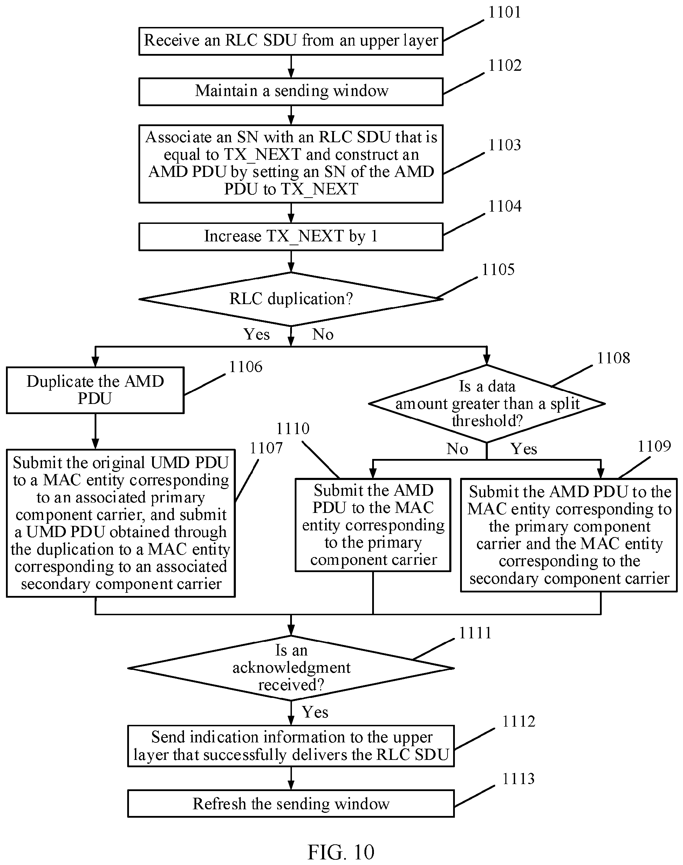

FIG. 10 is a schematic flowchart 2 of sending a service by an RLC entity on an access network device side in a CA scenario.

FIG. 10 shows a procedure in which an RLC entity, in an AM, on an access network device side sends a service. In FIG. 10, the RLC entity may correspond to the foregoing entity at the first layer, a payload carried in a PDU or an SDU may correspond to the foregoing first data, a MAC entity corresponding to a primary component carrier may correspond to the foregoing first entity at the second layer, and a MAC entity corresponding to a secondary component carrier may correspond to the foregoing second entity at the second layer.

In FIG. 10, an access network device may duplicate a data packet at an RLC layer. When sending a service, the RLC entity may be configured as a sending RLC entity, which is briefly referred to as an RLC entity below.

Step 1101: An RLC entity receives an RLC SDU from an upper layer.

The upper layer may be a PDCP layer. Descriptions in step 1101 and step 501 may be mutually referenced.

Step 1102: The RLC entity maintains a sending window based on a status variable.

The RLC entity does not submit, to its lower layer, any AM data (AM data, AMD) PDU whose SN falls outside the sending window.

Step 1103: The RLC entity associates an SN with an RLC SDU that is equal to TX_NEXT and constructs an AMD PDU by setting an SN of the AMD PDU to TX_NEXT.

Step 1104: The RLC entity increases TX_NEXT by 1.

Step 1105: The RLC determines whether RLC duplication is configured. In other words, the RLC entity determines whether the RLC duplication is activated. In other words, the RLC entity determines whether an RLC duplication function is enabled.

When the RLC duplication is configured, step 1106 is performed. When the RLC duplication is not configured, step 1108 is performed.

Step 1106: When the RLC duplication is configured, the RLC entity performs RLC duplication, and duplicates one copy of the AMD PDU at a packet sending moment.

The duplicated AMD PDU has the same information as the original AMD PDU.

Step 1107: The RLC entity submits the original PDCP PDU to a MAC entity corresponding to an associated primary component carrier, and submits the duplicated PDCP PDU to a MAC entity corresponding to an associated secondary component carrier.

Descriptions in steps 1106 and 1107, and step 502 may be mutually referenced.

Step 1108: When the RLC duplication is not configured, the RLC entity determines whether a total amount of to-be-processed RLC data and MAC data that are initially transmitted in the associated MAC entities is greater than a split threshold.

When the total data amount is less than or equal to the split threshold, step 1110 is performed. When the total data amount is greater than the split threshold, step 1109 is performed.

Step 1109: When the total data amount is greater than the split threshold, the RLC entity delivers the ADM PDU to the MAC entity corresponding to the primary component carrier and the MAC entity corresponding to the secondary component carrier.

Step 1110: When the total data amount is less than or equal to the split threshold, the RLC entity delivers the AMD PDU to the MAC entity corresponding to the primary component carrier.

Step 1111: The RLC entity determines whether an acknowledgement (acknowledgement, ACK) for an RLC SDU with SN=x is received.

Step 1112: When receiving the ACK for the RLC SDU with SN=x, the RLC entity sends indication information to the upper layer that successfully delivers the RLC SDU.

The indication information indicates that the RLC SDU has been successfully transmitted.

Step 1113: The RLC entity refreshes the sending window.

In FIG. 10, the access network device may duplicate a data packet at the RLC layer, and distribute the original data packet and the duplicated data packet to different MAC entities for transmission. For beneficial effects of the solution shown in FIG. 10, refer to the beneficial effects of the method 500. Details are not described again.

The foregoing describes the procedure on the first apparatus side with reference to FIG. 4 to FIG. 10. A procedure on a third apparatus side is described below.

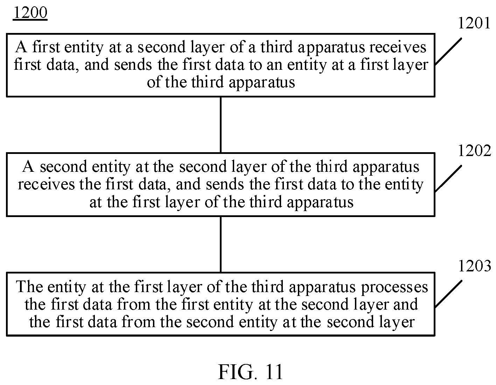

FIG. 11 is a schematic flowchart of a communication method 1200 according to an embodiment of this application.

The method 1200 may be performed by a third apparatus. Unless otherwise specified, the "third apparatus" may be a third apparatus itself, or may be a module or unit that can support the third apparatus in implementing a function of the third apparatus. The method 1200 includes at least a part of the following content.

Step 1201: A first entity at a second layer of the third apparatus receives first data, and sends the first data to an entity at a first layer of the third apparatus. Correspondingly, the entity at the first layer of the third apparatus receives the first data from the first entity at the second layer of the third apparatus.

Step 1202: A second entity at the second layer of the third apparatus receives the first data, and sends the first data to the entity at the first layer of the third apparatus. Correspondingly, the entity at the first layer of the third apparatus receives the first data from the second entity at the second layer of the third apparatus.

Specific protocol layers of the first layer and the second layer are not limited in this embodiment of this application. For example, the first layer is a PDCP layer, and the second layer is an RLC layer. For example, the first layer is an RLC layer, and the second layer is a MAC layer. For example, the first layer is an RLC layer, and the second layer is a PHY layer.

For example, the third apparatus in this embodiment of this application may be a terminal device.

When the first data is downlink data, the first entity and the second entity at the second layer of the third apparatus may receive the first data from a first apparatus, or receive the first data from a first apparatus and a second apparatus.

A standard of the first entity at the second layer of the third apparatus and/or a standard of the second entity at the second layer of the third apparatus are/is not limited in this embodiment of this application. The standard of the first entity at the second layer of the third apparatus and/or the standard of the second entity at the second layer of the third apparatus correspond/corresponds to a standard of the corresponding first apparatus or second apparatus. For example, when both the first entity at the second layer of the third apparatus and the second entity at the second layer of the third apparatus correspond to the first apparatus, if the first apparatus is of a 4G standard, both the first entity at the second layer of the third apparatus and the second entity at the second layer of the third apparatus may be of the 4G standard; or if the first apparatus is of a 5G standard, both the first entity at the second layer of the third apparatus and the second entity at the second layer of the third apparatus may be of the 5G standard. For example, when the first entity at the second layer of the third apparatus corresponds to the first apparatus and the second entity at the second layer of the third apparatus corresponds to the second apparatus, if the first apparatus is an access network device of a 4G standard and the second apparatus is an access network device of a 5G standard, the first entity at the second layer of the third apparatus is of the 4G standard and the second entity at the second layer of the third apparatus is of the 5G standard; or if the first apparatus is an access network device of a 5G standard and the second apparatus is an access network device of a 4G standard, the first entity at the second layer of the third apparatus is of the 5G standard and the second entity at the second layer of the third apparatus is of the 4G standard.

That the entity at the second layer of the third apparatus is of a specific standard may be understood as follows: The entity at the second layer of the third apparatus uses or supports a RAT corresponding to the standard, or the entity at the second layer of the third apparatus supports a service of the standard, or the like.

When both the first entity at the second layer of the third apparatus and the second entity at the second layer of the third apparatus correspond to the first apparatus, the first entity at the second layer of the third apparatus and the second entity at the second layer of the third apparatus receive the first data from the first apparatus. When the first entity at the second layer of the third apparatus corresponds to the first apparatus and the second entity at the second layer of the third apparatus corresponds to the second apparatus, the first entity at the second layer of the third apparatus receives the first data from the first apparatus, and the second entity at the second layer of the third apparatus receives the first data from the second apparatus.

A type of the first data is not limited in this embodiment of this application. For example, the first data is user plane data, for example, data carried in a data PDU (data PDU). For example, the first data is control plane data, for example, data carried in a control PDU (control PDU).

It should be noted that the first data in the method 1200 may be payload data or a payload. In this case, after receiving data including the first data, a header of the second layer, and a header of the first layer, the entity at the second layer of the third apparatus may remove the header of the second layer, and deliver data that is obtained by removing the header of the second layer to the entity at the first layer of the third apparatus. The data packet obtained by removing the header of the second layer includes the first data and the header of the first layer. The data submitted upwards by the first entity at the second layer of the third apparatus and the data submitted upwards by the second entity at the second layer of the third apparatus has the same first data and the same header of the first layer.

Step 1203: The entity at the first layer of the third apparatus processes the first data from the first entity at the second layer of the third apparatus and the first data from the second entity at the second layer of the third apparatus.

In a possible implementation, that the entity at the first layer of the third apparatus processes the first data from the first entity at the second layer of the third apparatus and the first data from the second entity at the second layer of the third apparatus includes: reordering processing and/or duplicate packet processing.

It should be noted that the entity at the first layer of the third apparatus may be associated with a plurality of entities at the second layer. An example in which the entity at the first layer of the third apparatus is associated with the first entity at the second layer and the second entity at the second layer is merely used above for description. This embodiment of this application is applicable to a scenario in which the entity at the first layer of the third apparatus is associated with more entities at the second layer, for example, a scenario in which the entity at the first layer of the third apparatus is associated with three entities at the second layer, or a scenario in which the entity at the first layer of the third apparatus is associated with four entities at the second layer. That the entity at the first layer of the third apparatus is associated with the first entity at the second layer and the second entity at the second layer may be understood as follows: The entity at the first layer of the third apparatus may receive and send data through the first entity at the second layer and the second entity at the second layer.

In this way, according to the method 1200, the third apparatus may receive same data on a plurality of links or a plurality of carriers, to be specific, may simultaneously transmit the same data on idle air interface resources corresponding to the plurality of links or the plurality of carriers. For example, when the plurality of links include a new radio transmission link and a long term evolution transmission link, the same data may be simultaneously transmitted on idle air interface resources of new radio and long term evolution. Therefore, in the method 1200, the idle air interface resources can be used as much as possible through redundant data transmission, to reduce packet loss and transmission delay, ensure reliability of downlink data transmission of a service, and help improve user experience of the service. For more detailed descriptions of the beneficial effects of the method 1200, refer to the method 500. Details are not described again.

In some other implementations, before the first entity at the second layer of the third apparatus sends the first data to the entity at the first layer of the third apparatus, the first entity at the second layer of the third apparatus performs reordering processing and/or duplicate packet processing on the first data, and/or before the second entity at the second layer of the third apparatus sends the first data to the entity at the first layer of the third apparatus, the second entity at the second layer of the third apparatus performs reordering processing and/or duplicate packet processing on the first data. Based on this implementation, time for processing the first data by the entity at the first layer of the third apparatus can be reduced. In addition, because the first entity at the second layer of the third apparatus and the second entity at the second layer of the third apparatus can simultaneously perform reordering processing and/or duplicate packet processing on the first data, overall data processing time can be reduced.

With reference to specific scenarios, a procedure on a third apparatus side in this embodiment of this application is described below in detail by using an example in which the third apparatus is a terminal device and the first layer is a PDCP layer or an RLC layer.

Scenario A: A PDCP entity of a terminal device performs reordering processing and/or duplicate packet processing.

If an access network device side performs PDCP duplication on a PDCP entity, and sends an original PDCP PDU and the duplicated PDCP PDU to a plurality of associated RLC entities, the PDCP entity of the terminal device may receive a plurality of PDCP PDUs from the plurality of RLC entities. The plurality of PDCP PDUs are the same. For processing performed by the PDCP entity of the terminal device on each PDCP PDU, refer to Clause 5.2.2 in the standard protocol TS 38.323.

Scenario B: An RLC entity of a terminal device performs reordering processing and/or duplicate packet processing.

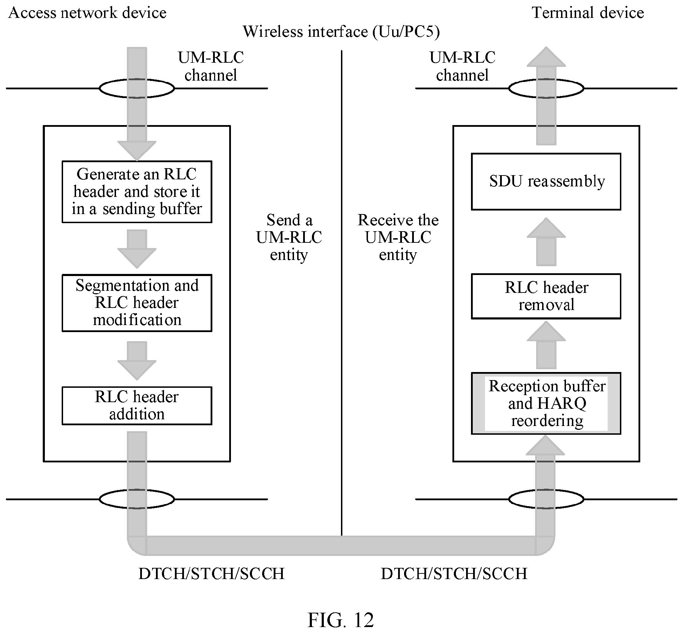

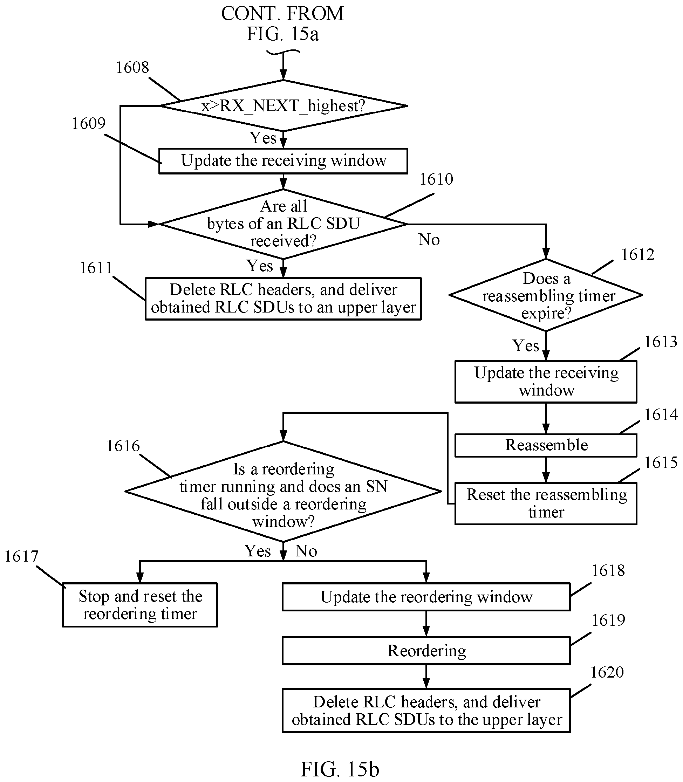

If an access network device side performs RLC duplication on an RLC entity, and sends an original RLC PDU and the duplicated RLC PDU to a plurality of associated MAC entities, the RLC entity of the terminal device may receive a plurality of RLC PDUs from the plurality of MAC entities. The plurality of RLC PDUs are the same. Processing performed by the RLC entity of the terminal device on each RLC PDU may be shown in FIG. 12 to FIG. 15a and FIG. 15b below.

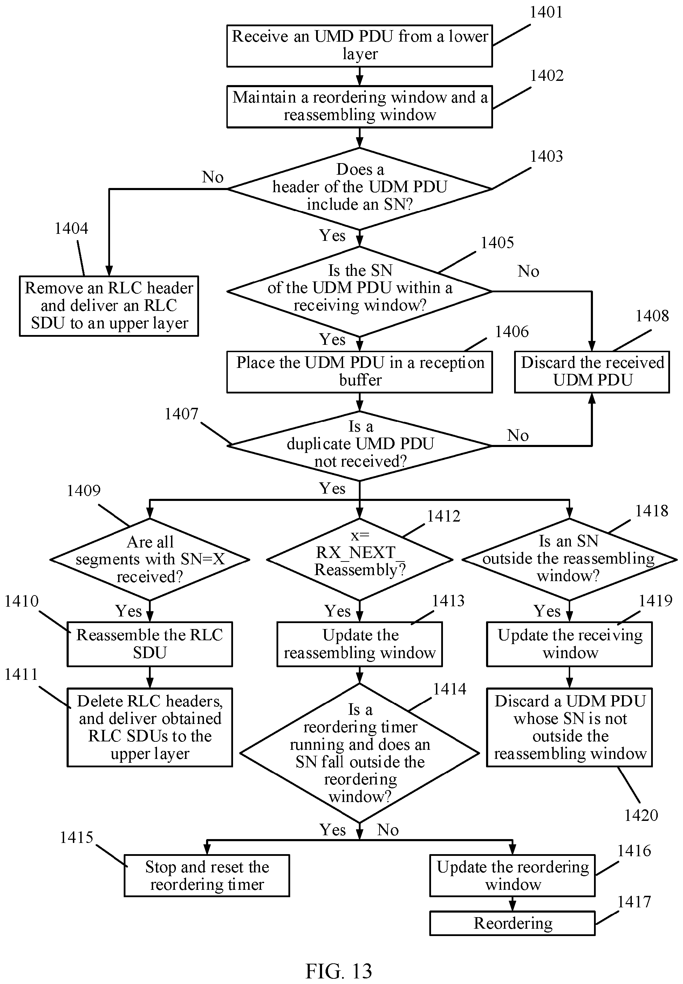

A procedure in which an RLC entity, in a UM, on a terminal device side receives a service is described below with reference to FIG. 12 and FIG. 13.

FIG. 12 is a diagram of an overall procedure of RLC processing, in a UM, on a terminal device side.

When a UMD PDU is received, a receiving UM RLC entity may perform the following operations:
(1) detecting whether a duplicate UMD PDU is received and discard the duplicate UMD PDU, and reordering UMD PDUs if out-of-order delivery is not configured and the UMD PDUs are out of order;
(2) removing an RLC header; and
(3) reassembling the reordered UMD PDUs to obtain RLC SDUs, and delivering the RLC SDUs to an upper layer in ascending order of RLC SNs.

It can be learned that in this embodiment of this application, an RLC entity (for example, the receiving UM RLC entity in FIG. 12) may perform duplicate packet discarding and reordering on UMD PDUs.

For descriptions of other operations in FIG. 12, refer to Clause 5.2.2 in the related standard TS 38.322. Details are not described.

FIG. 13 is a diagram of a specific procedure of RLC processing, in a UM, on a terminal device side.

In FIG. 13, an RLC entity may correspond to the foregoing entity at the first layer, and a payload carried in a PDU or an SDU may correspond to the foregoing first data. In FIG. 13, a terminal device may implement duplicate packet discarding and reordering of data packets at an RLC layer. When receiving a service, the RLC entity may be configured as a receiving RLC entity, which is briefly referred to as an RLC entity below.

Step 1401: An RLC entity receives a UMD PDU from a lower layer.

The lower layer may be a MAC layer. The UDM PDU may be one of a plurality of same UMD PDUs that can be received by the RLC entity. Descriptions in step 1401 and step 1201 or step 1202 may be mutually referenced.

Step 1402: The RLC entity maintains a reordering window and a reassembling window based on a status variable.

Step 1403: The RLC entity determines whether a header of the UMD PDU includes an SN.

When the header of the UMD PDU does not include the SN, step 1404 may be performed; or when the header of the UMD PDU includes the SN, step 1405 may be performed.

Step 1404: The RLC entity removes an RLC header from the UMD PDU, and delivers an obtained RLC SDU to an upper layer.

Step 1405: The RLC entity determines whether the SN of the UDM PDU is within a receiving window.

When the SN of the UDM PDU is within the receiving window, step 1406 may be performed; or when the SN of the UDM PDU is not within the receiving window, step 1408 may be performed.

Step 1406: The RLC entity places the UDM PDU in a reception buffer.

Step 1407: The RLC entity determines whether a duplicate UDM PDU is received.

When the UDM PDU is a duplicate UDM PDU, step 1408 may be performed; or when the UDM PDU is not a duplicate UDM PDU, step 1409, step 1412, and step 1418 may be performed.

Step 1408: The RLC entity discards the received UMD PDU.

Step 1409: The RLC entity determines whether all segments of an RLC SDU with SN=x are received.

When all the segments of the RLC SDU with SN=x are received, step 1410 may be performed.

Step 1410: The RLC entity reassembles the RLC SDU based on all the segments with SN=x.

Step 1411: The RLC entity removes an RLC header and delivers a reassembled RLC SDU to the upper layer.

Step 1412: The RLC entity determines whether x is equal to RX_Next_Reassembly.

RX_Next_Reassembly indicates an SN of a next reassembled SDU that is expected to be received.

When x is equal to RX_Next_Reassembly, step 1413 may be performed.

Step 1413: The RLC entity updates the reassembling window.

Step 1414: The RLC entity determines whether a reordering timer is running and whether an SN falls outside the reordering window.

When the reordering timer is running and the SN falls outside the reordering window, step 1415 is performed; otherwise, step 1416 is performed.

Step 1415: The RLC entity stops and resets the reordering timer.

Step 1414: The RLC entity updates the reordering window.

Step 1417: The RLC entity reorders RLC SDUs, deletes RLC headers, and delivers obtained RLC SDUs to the upper layer.

Step 1418: The RLC entity determines whether SN=x is outside the reassembling window.

When SN=x is or is not outside the reassembling window, step 1419 is performed.

Step 1419: The RLC entity updates the receiving window.

Step 1420: The RLC entity discards a UMD PDU whose SN is not outside the reassembling window.

Descriptions in steps 1402 to 1420 and step 1203 may be mutually referenced.

In FIG. 12 and FIG. 13, the terminal device may perform duplicate packet discarding and reordering on data packets at the RLC layer (as shown in steps 1402, 1407, and 1414 to 1417). For beneficial effects of the solutions shown in FIG. 12 and FIG. 13, refer to the beneficial effects of the method 1200. Details are not described again.

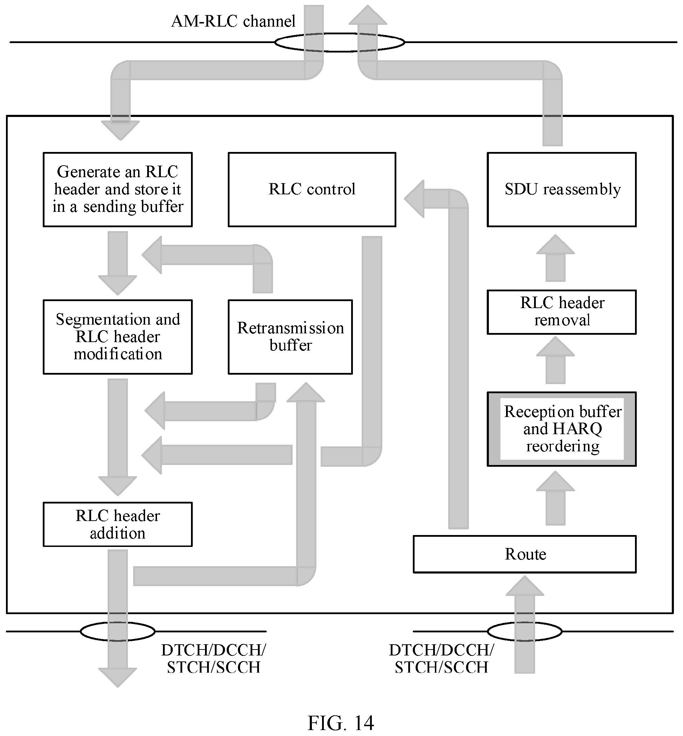

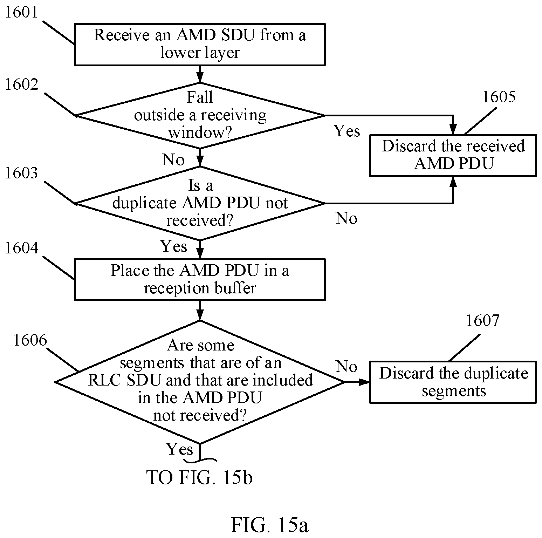

A procedure in which an RLC entity, in an AM, on a terminal device side receives a service is described below with reference to FIG. 14 and FIG. 15a and FIG. 15b.

FIG. 14 is a diagram of an overall procedure of RLC processing, in an AM, on a terminal device side.

When an AMD PDU is received, a receiving AM RLC entity may perform the following operations:
(1) detecting whether a duplicate AMD PDU is received and discard the duplicate AMD PDU, and reordering AMD PDUs if out-of-order delivery is not configured and the AMD PDUs are out of order;
(2) detecting a loss of an RLC data PDU and requesting a sending AM RLC entity to retransmit the lost RLC data PDU;
(3) removing an RLC header; and
(4) if the out-of-order delivery is not configured, reassembling the reordered AMD PDUs to obtain an RLC SDU, and sequentially delivering the RLC SDU to an upper layer; or if the out-of-order delivery is configured, reassembling the reordered AMD PDUs to obtain an RLC SDU, and directly delivering the RLC SDU to an upper layer.

It can be learned that in this embodiment of this application, an RLC entity (for example, the receiving AM RLC entity in FIG. 14) may perform duplicate packet discarding and reordering on AMD PDUs.

For descriptions of other operations in FIG. 14, refer to Clause 5.2.3 in the related standard TS 38.322. Details are not described.

FIG. 15a and FIG. 15b are a diagram of a specific procedure of RLC processing, in an AM, on a terminal device side.

In FIG. 15a and FIG. 15b, an RLC entity may correspond to the foregoing entity at the first layer, and a payload carried in a PDU or an SDU may correspond to the foregoing first data. In FIG. 15a and FIG. 15b, a terminal device may implement duplicate packet discarding and reordering of data packets at an RLC layer. When receiving a service, the RLC entity may be configured as a receiving RLC entity, which is briefly referred to as an RLC entity below.

Step 1601: An RLC entity receives an AMD PDU from a lower layer.

The lower layer may be a MAC layer. The ADM PDU may be one of a plurality of same AMD PDUs that can be received by the RLC entity. Descriptions in step 1601 and step 1201 or step 1202 may be mutually referenced.

Step 1602: The RLC entity determines whether an SN of the ADM PDU is within a receiving window.

When the SN of the ADM PDU is within the receiving window, step 1603 may be performed; or when the SN of the ADM PDU is not within the receiving window, step 1605 may be performed.

Step 1603: When the SN of the ADM PDU is within the receiving window, the RLC entity determines whether a duplicate ADM PDU is received.

When the ADM PDU is a duplicate ADM PDU, step 1605 may be performed; or when the ADM PDU is not a duplicate ADM PDU, step 1604 may be performed.

Step 1604: When the ADM PDU is not a duplicate ADM PDU, the RLC entity places the ADM PDU in a reception buffer.

Step 1605: The RLC entity discards the received AMD PDU.

Step 1606: The RLC entity determines whether some segments of an RLC SDU that are included in the AMD PDU are not received.

When some segments of the RLC SDU that are included in the AMD PDU are not received, step 1608 may be performed; or when some segments of the RLC SDU that are included in the AMD PDU are received, step 1607 may be performed.

Step 1607: When some segments of the RLC SDU that are included in the AMD PDU are received, the RLC entity discards the duplicate segments.

Step 1608: When some segments of the RLC SDU that are included in the AMD PDU are not received, the RLC entity determines whether SN=x is greater than or equal to RX_NEXT_highest.

RX_NEXT_highest indicates an SN upper limit of a reassembling window.

When SN=x is greater than or equal to RX_NEXT_highest, step 1609 may be performed; or when SN=x is less than RX_NEXT_highest, step 1610 may be performed.

Step 1609: When SN=x is greater than or equal to RX_NEXT_highest, the RLC entity updates the receiving window.

Step 1610: The RLC entity determines whether all segments of an RLC SDU with SN=x are received.

When all the segments of the RLC SDU with SN=x are received, step 1611 may be performed. When not all the segments of the RLC SDU with SN=x are received, step 1612 may be performed.

Step 1611: When all the segments of the RLC SDU with SN=x are received, the RLC entity reassembles the RLC SDU based on all the segments of the RLC SDU with SN=x, removes an RLC header, and delivers a reassembled RLC SDU to an upper layer.

Step 1612: When not all the segments of the RLC SDU with SN=x are received, the RLC entity determines whether a reassembling timer expires.

When the reassembling timer expires or not, step 1613 may be performed.

Step 1613: When the reassembling timer expires or not, the RLC entity updates the receiving window.

Step 1614: The RLC entity reassembles a packet.

Step 1615: The RLC entity resets the reassembling timer.

Step 1616: The RLC entity determines whether a reordering timer is running and whether an SN falls outside the reordering window.

When the reordering timer is running and the SN falls outside the reordering window, step 1617 is performed; otherwise, step 1618 is performed.

Step 1617: The RLC entity stops and resets the reordering timer.

Step 1618: The RLC entity updates the reordering window.

Step 1619: The RLC entity reorders RLC SDUs.

Step 1620: The RLC entity deletes RLC headers, and delivers obtained RLC SDUs to the upper layer.

Descriptions in steps 1602 to 1620 and step 1203 may be mutually referenced.

In FIG. 14 and FIG. 15a and FIG. 15b, the terminal device may perform duplicate packet discarding and reordering on data packets at the RLC layer (as shown in steps 1603, and 1616 to 1620). For beneficial effects of the solutions shown in FIG. 14 and FIG. 15a and FIG. 15b, refer to the beneficial effects of the method 1200. Details are not described again.

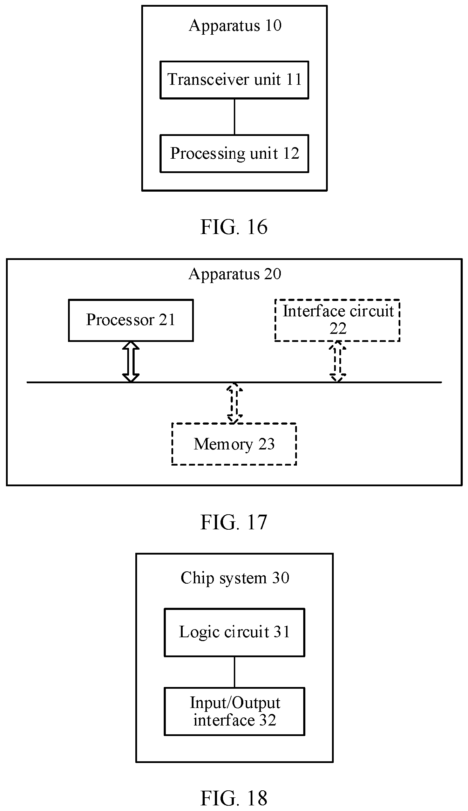

The foregoing describes in detail method embodiments provided in this application with reference to FIG. 4 to FIG. 15b. The following describes apparatus embodiments of this application with reference to FIG. 16 to FIG. 18.

It may be understood that to implement functions in the foregoing embodiments, apparatuses in FIG. 16 to FIG. 18 include corresponding hardware structures and/or software modules for performing each function. A person skilled in the art should be easily aware that, in this application, the units and method steps in the examples described with reference to embodiments disclosed in this application can be implemented by using hardware or a combination of hardware and computer software.

FIG. 16 and FIG. 17 are diagrams of structures of possible apparatuses according to embodiments of this application. These apparatuses may be configured to implement functions of the first apparatus, the second apparatus, or the third apparatus in the foregoing method embodiments, and therefore can also implement the beneficial effects of the foregoing method embodiments.

As shown in FIG. 16, an apparatus 10 includes a transceiver unit 11 and a processing unit 12.

When the apparatus 10 is configured to implement the functions of the first apparatus in the foregoing method embodiments, the transceiver unit 11 is configured to perform the sending and receiving steps of the first apparatus, and the processing unit 12 is configured to perform the processing step of the first apparatus. When the apparatus 10 is configured to implement the functions of the second apparatus in the foregoing method embodiments, the transceiver unit 11 is configured to perform the receiving and sending steps of the second apparatus, and the processing unit 12 is configured to perform the processing step of the second apparatus. When the apparatus 10 is configured to implement the functions of the third apparatus in the foregoing method embodiments, the transceiver unit 11 is configured to perform the receiving and sending steps of the third apparatus, and the processing unit 12 is configured to perform the processing step of the third apparatus.

For more detailed descriptions of the transceiver unit 11 and the processing unit 12, refer to related descriptions in the foregoing method embodiments. Details are not described herein again.

As shown in FIG. 17, an apparatus 20 includes a processor 21. The processor 21 is coupled to a memory 23. The memory 23 is configured to store instructions. When the apparatus 20 is configured to implement the foregoing method, the processor 21 is configured to execute the instructions in the memory 23, to implement a function of the foregoing processing unit 12.

In a possible implementation, the apparatus 20 further includes the memory 23.

In a possible implementation, the apparatus 20 further includes an interface circuit 22. The processor 21 and the interface circuit 22 are coupled to each other. It may be understood that the interface circuit 22 may be a transceiver or an input/output interface. When the apparatus 20 is configured to implement the foregoing method, the processor 21 is configured to execute the instructions to implement the function of the processing unit 12, and the interface circuit 22 is configured to implement a function of the transceiver unit 11.

For example, when the apparatus 20 is a chip used in the first apparatus, the second apparatus, or the third apparatus, the chip implements the functions of the first apparatus, the second apparatus, or the third apparatus in the foregoing method embodiments. The chip receives information from another module (for example, a radio frequency module or an antenna) in the first apparatus, the second apparatus, or the third apparatus, where the information is sent by the another apparatus to the first apparatus, the second apparatus, or the third apparatus; or the chip sends information to another module (for example, a radio frequency module or an antenna) in the first apparatus, the second apparatus, or the third apparatus, where the information is sent by the first apparatus, the second apparatus, or the third apparatus to the another apparatus.

FIG. 18 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, to cause the chip system 30 to implement the methods and functions in embodiments of this application. The input/output interface 32 may be an input/output circuit in the chip system 30, and outputs information processed by the chip system 30, or inputs to-be-processed data or signaling information into the chip system 30 for processing.

In a solution, the chip system 30 is configured to implement the operations performed by the first apparatus, the second apparatus, or the third apparatus in the foregoing method embodiments.

For example, the logic circuit 31 is configured to implement the processing-related operation performed by the first apparatus, the second apparatus, or the third apparatus in the foregoing method embodiments; and the input/output interface 32 is configured to implement the sending-related operation and/or receiving-related operation performed by the first apparatus, the second apparatus, or the third apparatus in the foregoing method embodiments.

This application further provides a communication apparatus, including a processor. The processor is coupled to a memory. The memory is configured to store a computer program or instructions and/or data. The processor is configured to: execute the computer program or the instructions stored in the memory, or read the data stored in the memory, to perform the method in the foregoing method embodiments. In a possible implementation, there is one or more processors. In a possible implementation, the communication apparatus further includes the memory. In a possible implementation, there is one or more memories. In a possible implementation, the memory and the processor are integrated together or disposed separately.

This application further provides a chip, including a processor. The processor is coupled to a memory. The memory is configured to store a computer program or instructions, and the processor is configured to execute the computer program or the instructions stored in the memory, to implement the method performed by the first apparatus, the second apparatus, or the third apparatus in the foregoing method embodiments.

This application further provides a computer-readable storage medium. The computer-readable storage medium stores computer instructions used to implement the method performed by the first apparatus, the second apparatus, or the third apparatus in the foregoing method embodiments.

This application further provides a computer program product, including instructions. When the instructions are executed by a computer, the method performed by the first apparatus, the second apparatus, or the third apparatus in the foregoing method embodiments is implemented.

This application further provides a communication system. The communication system includes at least one of the first apparatus, the second apparatus, or the third apparatus in the foregoing embodiments.

For explanations and beneficial effects of related content in any one of the apparatuses provided above, refer to the corresponding method embodiment provided above. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented by using hardware, or may be implemented by the processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the conventional technology. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in the first apparatus, the second apparatus, or the third apparatus. Certainly, the processor and the storage medium may alternatively exist in the first apparatus, the second apparatus, or the third apparatus as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer program or the instructions are loaded and executed on a computer, all or some of the procedures or functions in embodiments of this application are performed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

Unless otherwise stated, meanings of all technical and scientific terms used in embodiments of this application are the same as those usually understood by a person skilled in the technical field of this application. The terms used in this application are merely intended to describe objectives of the specific embodiments, and are not intended to limit the scope of this application. It should be understood that the foregoing descriptions are examples for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

## Claims

1. A communication method, wherein the method comprises:
receiving, by an entity at a first layer of a first apparatus, first data, wherein the entity at the first layer is associated with a first entity at a second layer and a second entity at the second layer; and
sending, by the entity at the first layer, the first data through the first entity at the second layer; and sending, by the entity at the first layer, the first data through the second entity at the second layer.

2. The method according to claim 1, wherein
the first layer is a packet data convergence protocol layer, and the second layer is a radio link control layer;
the first layer is a radio link control layer, and the second layer is a media access control layer; or
the first layer is a media access control layer, and the second layer is a physical layer.

3. The method according to claim 1 or 2, wherein
the first entity at the second layer and the second entity at the second layer belong to the first apparatus; or
the first entity at the second layer belongs to the first apparatus, and the second entity at the second layer belongs to a second apparatus.

4. The method according to claim 3, wherein
the first apparatus and the second apparatus are of a same standard.

5. The method according to claim 4, wherein
the first apparatus and the second apparatus are access network devices of a fifth generation standard.

6. The method according to claim 3, wherein
the first apparatus and the second apparatus are of different standards.

7. The method according to claim 6, wherein
the first apparatus is an access network device of a fifth generation standard, and the second apparatus is an access network device of a fourth generation standard; or
the first apparatus is an access network device of a fourth generation standard, and the second apparatus is an access network device of a fifth generation standard.

8. The method according to any one of claims 3 to 7, wherein
the first apparatus and the second apparatus are two access network devices connected to a same terminal device in a dual connectivity scenario.

9. The method according to any one of claims 1 to 8, wherein sending, by the entity at the first layer, the first data through the first entity at the second layer comprises:
sending, by the entity at the first layer, the first data to the first entity at the second layer; and
sending, by the first entity at the second layer, the first data through a first entity at a third layer; and sending, by the first entity at the second layer, the first data through a second entity at the third layer.

10. The method according to any one of claims 1 to 9, wherein the first data is user plane data.

11. The method according to any one of claims 1 to 10, wherein the method further comprises:
receiving, by the entity at the first layer, second data, wherein the second data is control plane data; and
sending, by the entity at the first layer, the second data through the first entity at the second layer, wherein the first entity at the second layer is an entity corresponding to a primary link or a primary component carrier.

12. The method according to any one of claims 1 to 11, wherein the method further comprises:
determining, by the entity at the first layer of the first apparatus, that a frequency domain duplication function is enabled.

13. A communication method, wherein the method comprises:
receiving, by a first entity at a second layer of a third apparatus, first data; and sending, by the first entity at the second layer, the first data to an entity at a first layer of the third apparatus;
receiving, by a second entity at the second layer, the first data; and sending, by the second entity at the second layer, the first data to the entity at the first layer; and
processing, by the entity at the first layer, the first data from the first entity at the second layer and the first data from the second entity at the second layer.

14. The method according to claim 13, wherein the processing comprises reordering processing and/or duplicate packet processing.

15. The method according to claim 13 or 14, wherein
the first layer is a packet data convergence protocol layer, and the second layer is a radio link control layer;
the first layer is a radio link control layer, and the second layer is a media access control layer; or
the first layer is a media access control layer, and the second layer is a physical layer.

16. The method according to any one of claims 13 to 15, wherein
receiving, by the first entity at the second layer of the third apparatus, the first data comprises: receiving, by the first entity at the second layer, the first data from a first apparatus; and
receiving, by the second entity at the second layer of the third apparatus, the first data comprises: receiving, by the first entity at the second layer, the first data from the first apparatus; or receiving, by the first entity at the second layer of the third apparatus, the first data comprises: receiving, by the first entity at the second layer, the first data from a first apparatus; and receiving, by the second entity at the second layer of the third apparatus, the first data comprises: receiving, by the second entity at the second layer, the first data from a second apparatus.

17. The method according to claim 16, wherein
the first apparatus and the second apparatus are of a same standard.

18. The method according to claim 17, wherein
the first apparatus and the second apparatus are two access network devices of a fifth generation standard that are connected to a same third apparatus in a dual connectivity scenario.

19. The method according to claim 16, wherein
the first apparatus and the second apparatus are of different standards.

20. The method according to claim 19, wherein
the first apparatus and the second apparatus are two access network devices connected to a same terminal device in a dual connectivity scenario, wherein
the first apparatus is an access network device of a fifth generation standard, and the second apparatus is an access network device of a fourth generation standard; or the first apparatus is an access network device of a fourth generation standard, and the second apparatus is an access network device of a fifth generation standard.

21. The method according to any one of claims 13 to 20, wherein
the first data is user data.

22. The method according to any one of claims 13 to 21, wherein
before the first entity at the second layer sends the first data to the entity at the first layer of the third apparatus, the method further comprises: performing, by the first entity at the second layer, reordering processing and/or duplicate packet processing on the first data; and/or
before the second entity at the second layer sends the first data to the entity at the first layer of the third apparatus, the method further comprises: performing, by the second entity at the second layer, reordering processing and/or duplicate packet processing on the first data.

23. A communication apparatus, comprising a module or a unit configured to perform the method according to any one of claims 1 to 22.

24. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement, through a logic circuit or by executing code instructions, the method according to any one of claims 1 to 22.

25. The communication apparatus according to claim 24, wherein the communication apparatus is a chip or a chip system.

26. A computer-readable storage medium, wherein the storage medium stores a computer program or instructions; and when the computer program or the instructions are executed by a communication apparatus, the method according to any one of claims 1 to 22 is implemented.

27. A computer program product comprising instructions, wherein when the instructions are run on a computer, the computer is caused to implement the method according to any one of claims 1 to 22.

28. A communication system, comprising a first apparatus and a second apparatus, wherein an entity at a first layer of the first apparatus is associated with a first entity at a second layer of the first apparatus and an entity at a second layer of the second apparatus, the first apparatus is configured to perform the method according to any one of claims 1 to 12, and the second apparatus is configured to: receive and send data from the entity at the first layer of the first apparatus.

29. A communication system, comprising an access network device configured to perform the method according to any one of claims 1 to 12, and a terminal device configured to perform the method according to any one of claims 13 to 22.
